# EUROPÄISCHE PATENTSCHRIFT

(11) **EP 1 057 117 B1**
(45) Veröffentlichungstag und Bekanntmachung des Hinweises auf die Patenterteilung: **15.05.2002**
(21) Anmeldenummer: 99913087.5
(22) Anmeldetag: 25.02.1999
(51) Int. Cl.: G06F 15/78, G06F 12/08

(54) **VERFAHREN ZUM HIERARCHISCHEN CACHEN VON KONFIGURATIONSDATEN VON DATENFLUSSPROZESSOREN UND BAUSTEINEN MIT ZWEI- ODER MEHRDIMENSIONALER PROGRAMMIERBARER ZELLSTRUKTUR (FPGAs, DPGAs, o.dgl.)**
METHOD FOR CACHEING CONFIGURATION DATA OF DATA FLOW PROCESSORS AND MODULES WITH A TWO- OR MULTIDIMENSIONAL PROGRAMMABLE CELL STRUCTURE (FPGAs, DPGAs OR SIMILAR) ACCORDING TO A HIERARCHY
PROCEDE POUR LA MISE EN ANTEMEMOIRE HIERARCHIQUE DE DONNEES DE CONFIGURATION DE PROCESSEURS DE FLUX DE DONNEES ET DE MODULES AVEC UNE STRUCTURE DE CELLULE PROGRAMMABLE BI- OU MUTLIDIMENSIONNELLE (FPGAs, DPGAs OU ANALOGUE)

(30) Priorität: 25.02.1998 DE 19807872
(43) Veröffentlichungstag der Anmeldung: 06.12.2000
(60) Teilanmeldung: 01120095.3
(73) Patentinhaber: Pact Informationstechnologie GmbH, 80807 Munchen (DE)
(72) Erfinder: VORBACH, Martin, D-76149 Karlsruhe (DE); MÜNCH, Robert, D-76149 Karlsruhe (DE)
(74) Vertreter: Pietruk, Claus Peter, Dipl.-Phys.
(86) Internationale Anmeldenummer: DE9900504
(87) Internationale Veröffentlichungsnummer: WO9944147

(56) Entgegenhaltungen:
- EP-A- 0 686 915
- EP-A- 0 707 269
- US-A- 4 860 201
- WADA K ET AL: "A PERFORMANCE EVALUATION OF TREE-BASED COHERENT DISTRIBUTED SHARED MEMORY" PROCEEDINGS OF THE PACIFIC RIM CONFERENCE ON COMMUNICATIONS, COMPUT AND SIGNAL PROCESSING, VICTORIA, MAY 19 - 21, 1993, Bd. 2, 19. Mai 1993 (1993-05-19), Seiten 390-393, XP000419298 INSTITUTE OF ELECTRICAL AND ELECTRONICS ENGINEERS

## Beschreibung

### Stand der Technik

Der Stand der Technik, welcher diese Patentschrift zugrunde liegt, ist durch die Patentanmeldung DE-A-196 54 846.2-53 (Verfahren zum selbständigen dynamischen Umladen von Datenflußprozessoren (DFPs) sowie Bausteinen mit zwei- oder mehrdimensionaler programmierbaren Zellmatrix (FPGAs, DPGAs, o.dgl.) und der Patentanmeldung DE-A- 196 54 593.5-53 (Umkonfigurierungs Verfahren für programmierbare Bausteine zur Laufzeit) beschrieben. Darin wird ein Verfahren zur Konfiguration und Umkonfiguration von DFPs, sowie FPGAs, DPGAs und ähnlichen Bausteinen nach dem Stand der Technik, beschrieben, bei dem ein separat ausgestalteter zentral übergeordneter Mikrokontroller-ähnlicher Baustein die Verteilung von Konfigurationsdaten an mehrere untergeordnete, weitgehend passive Steuereinheiten übernimmt.

### Probleme

Durch den Einsatz einer zentralen und globalen Einheit, welche die Rekonfiguration von Teilen (z.B. Zellen (CELs)) eines oder mehrerer Bausteine steuert, kommt es zu Engpässen, wenn viele verschiedene Rekonfigurations-Anfragen auf einmal behandelt werden müssen. Die Vorteile der Parallelität, der beschriebenen Bausteine, wird durch eine solche zentrale Einheit stark eingeschränkt, da sie den typischen "Flaschenhals" darstellt und die Verarbeitung der Daten dadurch erheblich verlangsamt.
Weiterhin ist die Zuordnung der Ereignisquelle zu der zu ladenden Konfiguration problematisch, da mit absoluten Adressen des Konfigurationsspeichers gearbeitet wird. Die Rekonfigurations-Einheit muß also eine Art Speicherverwaltungssystem beinhalten, welches, ähnlich wie in einem Betriebssystem, mitprotokolliert, welche Speicherbereiche von welcher Konfiguration benutzt werden.
Ein zusätzliches Problem stellt die Verwaltung der Resourcen (z.B. CELs) dar. Es muß sichergestellt sein, daß jede CEL nur genau einmal an einen von einer Rekonfigurationsanfrage gestarteten Algorithmus vergeben wird und zwar denjenigen der auch die restlichen umliegenden CEL verwendet, da ansonsten Deadlocks auftreten können.

Um die Problematik der Umkonfiguration nochmals zu verdeutlichen wird folgendes Beispiel gegeben:
Eine Matrix aus CELs ist unkonfiguriert und im RESET-Zustand. Jede CEL ist in der Lage anzuzeigen, ob sie sich in einem umkonfigurierbaren Zustand befindet. Alle CELs in der Matrix sind bereit konfiguriert zu werden; befinden sich also in einem umkonfigurierbaren Zustand. Eine erste Konfigurationsroutine (KR1) wird geladen, wobei die Matrix nicht vollständig benutzt wird. Die konfigurierten CELs heben die Anzeige, daß sie sich in einem konfigurierbaren Zustand befinden auf. In eine Gruppe der noch nicht konfigurierten CELs wird eine zweite, von der Ersten unabhängigen, Konfigurationsroutihe (KR2) geladen. Eine dritte Konfiguration kann nicht geladen werden, da diese CELs der ersten und/oder zweiten Konfigurationsroutine (KR3) benötigt, die sich aber in keinem umkonfigurierbaren Zustand befinden, da sie benutzt werden.
KR3 muß so lange angehalten werden, bis die benötigten CEL freigegeben wurden, d.h. KR1 und KR2 terminiert haben.
Während der Ausführung von KR1 und KR2 kommt eine Ladeanforderung für eine vierte Konfigurationsroutine (KR4) und eine fünfte Konfigurationsroutine (KR5) hinzu, die alle nicht sofort geladen werden können, da sie CELs benutzen, die von KR1 und KR2 verwendet werden. KR3 und KR4 benutzen teilweise die selben CELs, KR5 benutzt keine der CELs von KR3 und KR4.

Um KR3-5 ordentlich nachzuladen existieren folgende Forderungen:
1. KR3-5 sollen so geladen werden, daß die zeitliche Reihenfolge gemäß den Ladeanforderungen möglichst beibehalten wird.
2. Möglichst viele KR die unabhängig von einander sind, also keine gemeinsamen CELs besitzen, sollen geladen werden, um ein Höchstmaß an Parallelität zu erhalten.
3. Die KRs dürfen sich nicht gegenseitig blockieren, d.h. KR3 ist teilweise geladen, kann jedoch nicht weiter geladen werden, da andere CELs durch die teilweise geladene KR4 blockiert sind; während KR4 auch nicht weiter geladen werden kann, da wiederum benötigte CELs durch KR3 blockiert sind. Dies führt zu einer typische Deadlock-Situation.
4. Dem Compiler, der die KRs generiert hat ist es nicht möglich das zeitliche Zusammenspiel der KRs zu erkennen und so aufzulösen, daß es zu keiner Konfliktsituation kommt.

Dabei soll das Verhältnis zwischen den Aufwand für eine zu realisierende Schaltung und eines optimalen Ergebnisses möglichst gut sein, d.h. Ziel der Erfindung ist es mit möglichst geringem Aufwand eine flexible, parallele, Deadlock-freie Konfiguration zu ermöglichen, die mit wenig Zeit- und Rechenaufwand durchgeführt werden kann. Dabei müssen folgende Grundprobleme gelöst werden:
- Würde nur KR3 geladen werden, wäre das Verfahren Deadlock-frei, doch nicht optimal, da auch KR5 geladen werden könnte.
- Wird KR3 geladen, KR4 nicht, jedoch KR5 muß KR4 so vorgemerkt werden, daß es bei einem nachfolgenden Ladevorgang die höchste Priorität besitzt, was einen hohen Verwaltungsaufwand bedeutet.

Die Deadlockfreiheit ist durch das nachfolgend beschriebene Verfahren gegeben:

### Verbesserung durch die Erfindung, Aufgabe

Die Grundaufgabe der vorliegenden Erfindung ist eine Einheit - im folgenden Konfigurationstabelle (CT) genannt -, die hierarchisch aufgebaut ist und auf jeder Ebene mehrfach vorkommen kann, wobei sich die Zahl der CTs von der untersten Hierarchiestufe zur obersten so verringert, daß auf der höchsten Ebene genau eine CT vorhanden ist. Jede CT konfiguriert und kontrolliert unabhängig von anderen und parallel eine Mehrzahl von konfigurierbaren Elementen (CELs). CTs höherer Hierarchiestufen können Konfigurationsroutinen für tieferliegende CTs zwischenspeichern. Benötigen mehrere der tieferliegenden CTs ein und dieselbe Konfigurationsroutine, wird diese bei einer höherliegenden CT zwischengespeichert und von den einzelnen CTs abgerufen, wobei die höherliegende CT die betreffende Konfigurationsroutine nur ein Mal aus einem globalen gemeinsamen Konfigurationsspeicher abruft, wodurch ein Cache-Effekt erzielt wird. Abseits konfigurierbarer Bausteine kann die vorliegende Erfindung als Cacheverfahren für Instruktions- und Datencache in Mikroprozessoren, DFP oder dgl. mit mehreren Rechenwerken eingesetzt werden. Dabei können, je nach Anwendung, einige der im folgenden beschriebenen Einheiten entfallen (z.B. FILMO), am hierarchischen Aufbau ändert sich jedoch grundlegend nichts. Deshalb wird dieser Einsatz als eine Teilmenge betrachtet und nicht weiter darauf eingegangen. Ein erheblicher Vorteil des beschriebenen Verfahrens gegenüber gewöhnlichen Cacheverfahren ist, daß Daten und/oder Code selektiv, d.h. anhand von exakt auf den Algorithmus abgestimmten Methoden gecached werden.
Ebenfalls ermöglicht die vorliegende Erfindung das vollständig deadlockfreie Umkonfigurieren von großen Zellstrukturen.

### Beschreibung der Erfindung

Anstatt wie bisher eine zentrale und globale Einheit in einen Baustein zu integrieren, welche alle Konfigurations-Anforderungen bearbeitet, existieren nun eine Mehrzahl von hierarchisch (Baumstruktur) angeordneten aktiven Einheiten, welche diese Aufgabe übernehmen können.
Dabei wird eine Anforderung von der tiefesten Ebene (den Blättern in der Hierarchie) nur dann an die nächst höher gelegene Ebene weitergeleitet, wenn die Anforderung nicht bearbeitet werden konnte. Diese Schritte werden für alle vorhandenen Ebenen wiederholt, bis die höchst gelegene Ebene erreicht ist.
Die höchst gelegene Ebene ist an einen internen oder externen übergeordneten Konfigurationspeicher angeschlossen, der alle jemals für diesen Programlauf, benötigten Konfigurationsdaten enthält.

Durch die Baumstruktur der Konfigurationseinheiten wird eine Art Cacheing der Konfigurationsdaten erreicht. Zugriffe auf Konfigurationen finden hauptsächlich lokal statt. Im ungünstigsten Fall muss eine Konfiguration aus den übergeordneten Konfigurationsspeicher geladen werden, falls die betreffenden Daten in keiner der hierarchisch angeordneten CTs vorhanden sind.
Deadlocks werden verhindert, indem eine feste zeitliche Abfolge der zu ladenden Konfigurationen eingeführt wird und die Konfigurationen zu einer Liste zusammengefaßt werden. Die Statusinformationen der CEL werden vor dem Laden gesichert und bleiben dadurch während des Abarbeitens der gesamten Liste von Konfigurationen unverändert.

### Die Grundlagen der CT

Eine Konfigurationstabelle (CT) ist eine aktive Einheit, die auf Synchronisationssignale, sogenannten Trigger, reagiert. Die Trigger werden von einer zwei- oder mehrdimensionalen Matrix aus elektronischen Baugruppen, für gewöhnlich arithmetischen oder logischen Einheiten, Adressgeneratoren, Recheneinheiten, o.ä. - im folgenden konfigurierbare Elemente (CEL) genannt - generiert. Anhand des auftretenden Triggers wird eine bestimmte Aktion innerhalb der CT ausgelöst. Dabei ist es Aufgabe der CT die Steuerung einer Mehrzahl von CELs zu übernehmen und deren arithmetischen und/oder logischen Operationen zu bestimmen. Insbesondere müssen CELs konfiguriert und umkonfiguriert werden. Diese Aufgabe übernimmt eine CT, indem sie eine Mehrzahl von möglichen Konfigurationsroutinen (KR), die ihrerseits jeweils aus einer Mehrzahl von einzelnen Konfigurationsworten (KW) bestehen, verwaltet und eine Mehrzahl von CELs aufgrund von Triggerbedingungen mit einer oder mehrerer der KR konfigurieren. Dabei erhält eine CEL jeweils eines oder mehrere der Konfigurationsworte, die mit der Adresse der zu konfigurierenden CEL versehen sind. Eine KR muß dabei vollständig und korrekt auf eine Mehrzahl von CELs abgebildet werden, wobei mehrere CELs zu Gruppen zusammengefaßt sein können; die mit jeweils unterschiedlichen, aber vollständig ausgeführten KRs konfiguriert werden. Dabei sind alle CELs in einer Gruppe so verschaltet, daß nach Feststellung einer notwendigen Umkonfigurierung alle gruppierten CELs durch ein gemeinsames Signal (ReConfig) mitgeteilt wird, daß jede CEL die Datenverarbeitung zu beenden und in einen umkonfigurierbaren Zustand überzugehen hat.

### Grundlagen der deadlockfreien Umkonfiguration

Bei zur Laufzeit umkonfigurierbaren Systemen tritt das Problem auf, daß das System in einen Zustand gelangen kann, in dem jeweils zwei Teile aufeinander warten und somit eine Deadlock Situation eingetreten ist.

Dieses Problem könnte vermieden werden, indem eine neue Konfiguration immer nur ganz oder gar nicht in das System geladen wird, oder eine Art Timeout-Verfahren eingesetzt wird.
Dadurch entstehen ein Reihe von Nachteilen (benötigter Platz, Laufzeit etc.) und Problemen, wie zum Beispiel:
- Vorgehen, falls eine Konfiguration nicht geladen werden kann.
- Verwaltung der Reihenfolge, in der die Konfigurationen geladen werden
- Performance Einbruch, da andere Konfigurationen, welche eventuell in die CELs geladen werden könnten, nicht beachtet werden.

Mit dem folgend beschriebenen Verfahren können diese Probleme beseitigt werden. Es wird von einem DFP System nach dem Stand der Technik ausgegangen.

Von einer CEL aus, wird ein Trigger-Signal an eine CT gesendet. Diese CT stellt die Triggerquelle fest und wählt durch eine Look-Up Tabelle eine zu ladende Konfiguration (KR) aus. Die eingehenden Triggersignale werden gesperrt, es werden keine weiteren Trigger bis zur kompletten Abarbeitung der aktuellen Konfiguration akzeptiert. Eine Konfiguration besteht aus mehreren Befehlen, welche an eine Menge von CELs übertragen wird. In einem zur Laufzeit konfigurierbaren System ist allerdings nicht sichergestellt, daß jeder Konfigurations-Befehl (KW) auch ausgeführt werden kann. Dies kann zum Beispiel daran scheitern, daß das adressierte konfigurierbare Element (CEL) seine Aufgabe noch nicht beendet hat und somit keine neuen Konfigurationsdaten entgegen nehmen kann. Um einen Performance Einbruch zu verhindern, werden alle Konfigurationsbefehle, welche nicht abgearbeitet werden konnten (da sich die entsprechenden CELs in einem nicht umkonfigurierbaren Zustand befanden und die Konfiguration ablehnten (REJECT)), entsprechend eines FIFOs hinter den letzten sich in einem (nachfolgend näher beschrieben) speziellen Speicher (FILMO) befindenden Konfigurationsbefehl geschrieben. Danach wird der nächsten Konfigurationsbefehl, nach dem gleichen Verfahren, abgearbeitet. Dies wiederholt sich solange, bis das Ende einer Konfiguration erreicht wurde.

Danach geht die CT, wieder in den Zustand über, in dem sie Trigger-Signale akzeptiert, um eventuell weiter Konfigurationen zu laden. In diesem Zustand arbeitet die CT den FILMO in regelmäßigen Abständen, durch einen Zeitgeber gesteuert, ab.

Eine Priorisierung der zu ladenden Konfigurationen wird erreicht, indem die CT den Speicher FILMO durchläuft, bevor die eigentlich zu ladende Konfiguration bearbeitet wird. Durch eine FIFO-ähnliche Struktur des FILMO wird sichergestellt, daß KWs, welche während vorhergehenden Triggeranforderungen nicht vollständig abgearbeitet werden konnten, automatisch eine höhere Priorität vor den neu abzuarbeitenden WK erhalten. Bei der Abarbeitung des Speichers (FILMO) wird jedes durch einen Konfigurationsbefehl adressierte konfigurierbare Element (CEL) vor oder währende des Sendens eines KWs getestet, ob es sich im Zustand "umkonfigurierbar" befindet. Ist dieser Zustand "umkonfigurierbar" (ACCEPT), werden die Daten übertragen und aus dem Speicher FILMO gelöscht. Ist der Zustand "nicht umkonfigurierbar" (REJECT), bleiben die Daten im FILMO und werden beim nächsten Durchlauf erneut abgerarbeitet. Die CT verarbeitet den nächsten Eintrag im FILMO.
Dies wiederholt sich solange, bis das Ende des FILMO erreicht ist. Danach wird die eigentliche, durch das Auftreten des Trigger-Signals aktivierte Konfiguration abgearbeitet. Der Aufbau des FILMOs entspricht dabei dem FIFO Prinzip, das heißt, es werden die ältesten Einträge zuerst verarbeitet. Um den FILMO auch abzuarbeiten, wenn keine neue KR geladen wird, wird der FILMO von einem Timer gesteuert in regelmäßigen Abständen durchlaufen.

Die übrigen, nicht beteiligten konfigurierbaren Elemente (CEL) arbeitet während dieser Phase parallel weiter und wird nicht in ihrer Funktion beeinflußt. Dadurch kann der Fall eintreten, daß während die CT den FILMO abarbeitet, eine oder mehrere konfigurierbaren Elemente (CELs) in den Zustand "umkonfigurierbar" übergehen. Da die CT sich mit der Abarbeitung an einer beliebigen Stelle innerhalb des FILMOs befinden kann, könnte folgender Fall eintreten:

Die CT versucht einen ersten Befehl abzuarbeiten dessen adressiertes konfigurierende Element (CEL) sich nicht in dem Zustand "umkonfigurierbar" befindet. Die CT fährt somit mit dem nächsten Befehl (KW) fort. Zur selben Zeit gehen ein oder mehrere konfigurierbaren Elemente in den Zustand "umkonfigurierbar" über, darunter auch das konfigurierbare Element, welches durch den ersten Konfigurationsbefehl hätte beschrieben werden können. Die CT verarbeitet einen zweiten Konfigurationsbefehl (KW), welcher das gleiche konfigurierbare Element (CEL) benutzt, wie der erste Konfigurationsbefehl, allerdings aus einer anderen Konfiguration stammt. Zu diesem Zeitpunkt, befindet sich das konfigurierbare Element (CEL) in dem Zustand "umkonfigurierbar" und der Befehl kann erfolgreich abgerarbeitet werden.

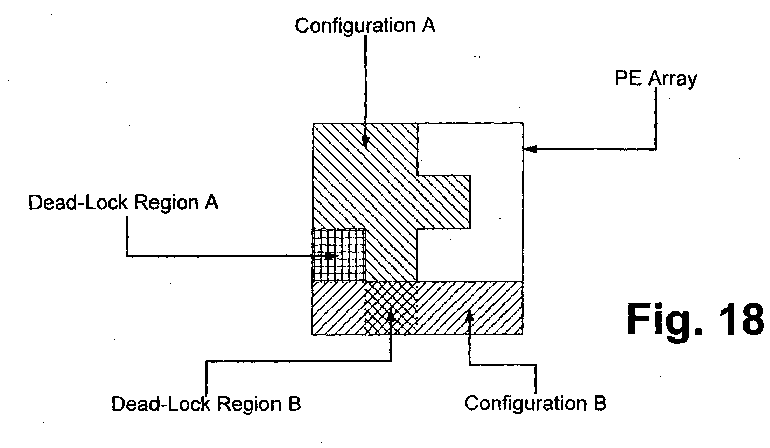

Dadurch ist nicht mehr sichergestellt, daß die Konfiguration, welche zuerst geladen werden sollte, auch tatsächlich zuerst fertiggestellt wird. Es können nun zwei teilweise fertige Konfigurationen existieren, welche jeweils konfigurierbare Elemente der anderen Konfiguration benötigen, um vollständig geladen zu werden. Eine Deadlock-Situation ist eingetreten, die in **Figur 18** verdeutlicht wird. Konfiguration A und Konfiguration B sollen konfiguriert werden. Die CT hat den schraffierten Teil von Konfiguration A und Konfiguration B bereits geladen. Konfiguration A benötigt zur Fertigstellung noch den hell-doppelt schraffierten Bereich von Konfiguration B, und Konfiguration B benötigt zur Fertigstellung noch den dunkel-doppelt schraffierten Bereich von Konfiguration A. Da beide Konfigurationen noch nicht vollständig abgeschlossen sind, und somit auch nicht funktionsfähig, tritt für keine der beiden Konfigurationen der Terminierungszustand ein, in dem eine der beiden Konfigurationen entfernt würde. Beide Konfigurationen warten darauf, daß die noch benötigten konfigurierbaren Elemente freigegeben werden.

In dem vorliegenden Verfahren wird ein Deadlock verhindert, indem die CT vor der Abarbeitung des FILMOs die Zustände aller konfigurierbarer Elemente erfaßt und danach bis zur Beendigung des Vorgangs keine Änderungen mehr zuläßt, bzw. auftretende Änderungen ignoriert. Mit anderen Worten, es werden entweder die Zustände aller konfigurierbaren Elemente vor der Abarbeitung des FILMOs gesichert oder eine Veränderung der Zustände während der Abarbeitung des FILMOs verhindert. Eine mögliche technische Ausführung ist der Einsatz eines Registers in jedem konfigurierbaren Element, in das der Zustand vor Abarbeitung des FILMOs gesichert wird. Die CT arbeitet nur auf Basis der erfaßten Zuständen und nicht mit den aktuellen Zuständen der konfigurierbaren Elemente. Dadurch ist sichergestellt, daß jeder zu bearbeitende Befehl (KW) den gleichen Zustand der konfigurierbaren Elemente (CELs) vorfindet. Dieser Schritt schließt nicht aus, daß ein oder mehrere konfigurierbaren Elemente während der Abarbeitung des FILMOs, in den Zustand "umkonfigurierbar" übergehen. Diese Änderung ist für die CT während der Verarbeitung lediglich nicht sofort sichtbar, sondern erst zu Beginn des nächsten Durchlaufs.

### Konfigurations-Reihenfolgen

Zur Konfiguration bestimmter Algorithmen ist es unbedingt notwendig, die Reihenfolge in der die KW in die CEL geschrieben werden exakt einzuhalten. Beispielsweise ist es sinnvoll vor Anschluß einer CEL an ein Bussystem, zuerst das Bussystem zu konfigurieren, damit die CEL nicht an einen von einer anderen Routine benutzten Bus angeschlossen wird. Mit anderen Worten, eine CEL wird nur konfiguriert, wenn vorher die entsprechenden Busverbindungen konfiguriert werden konnten.
In dem erfindungsgemäßen Verfahren wird die Einhaltung eines festen Ablaufes wie folgt erreicht:
Konfigurationsworte (KWs), deren Ausführung entscheidend für die Konfiguration der nachfolgenden KWs sind, werden besonders gekennzeichnet (und im folgenden KWR genannt). Schlägt die Konfiguration eines solchen KWR fehl, werden alle nachfolgenden KWs innerhalb der betreffenden Konfigurationsroutine (KR) auf den FILMO geschrieben und in diesem Durchlauf nicht ausgeführt. Auch beim Durchlaufen des FILMOs werden sämtliche KWs, die sich in der Reihenfolge hinter einem KWR befinden, dessen Konfiguration fehlschlug, in dem aktuellen Durchlauf nicht ausgeführt.

### Cache-Verfahren

Die CT-Struktur ist hierarchisch aufgebaut, d.h. es existieren in einem Baustein mehrere CT-Ebenen. Die Anordnung entspricht vorzugsweise einer Baumstruktur (CT-Tree). Dabei ist der Wurzel-CT (Root-CT) ein externer Konfigurationsspeicher (ECR), der sämtliche KRs enthält zugeordnet, während den Blättern die konfigurierbaren Elemente (CELs) zugeordnet sind, die einzelne KRs aufrufen. Den CTs der mittleren Ebenen sind jeweils die konfigurierbaren Elemente zugeordnet, die sich auf derselben Hierarchiestufe befinden.
Jeder CT ist ein lokaler interner Speicher zugeordnet. Dieser Speicher wird partiell gelöscht, wenn neu zu speichernde KRs keinen Platz mehr haben, oder dies explizit durch einen speziellen CT-Befehl (REMOVE) angefordert wird. Dabei erfolgt das Löschen KR-weise, anhand einer Löschstrategie, so daß bestenfalls nur die KR gelöscht werden, die nicht mehr angefordert werden oder explizit beim REMOVE-Befehl angegeben sind. Ebenfalls werden die KR einzeln gelöscht, nur genau so viele, daß genau so viel Speicher frei ist, wie notwendig ist um die neu zu ladende KR in den Speicher zu schreiben. Dadurch wird erreicht, daß möglichst viele KR zur Optimierung des Cache-Effektes in dem Speicher verbleiben.
Der Vorteil liegt darin, daß jede, einer beliebigen CTx untergordente CT, die sich also weiter oberhalb im CT-Baum befindet eine KR, die in der CTx gespeichert ist, nicht von dem externen Konfigurationsspeicher ECR anfordert, sondern direkt von CTx erhält. Dadurch ergibt sich eine Cachestruktur über mehrere Ebenen. Der Datenübertragungsaufwand im CT-Baum und insbesondere die benötigte Speicherbandbreite des ECR wird erheblich gesenkt.
Mit anderen Worten speichert jede CT die KRs der unter ihr liegenden CT zwischen. D.h. die tieferliegenden CTs erhalten die benötigten KRs direkt von den darüberliegenden, ein Speicherzugriff auf das externe ECR ist nicht notwendig. Nur wenn eine benötigte KR nicht in einer der höherliegenden CTs bereits vorhanden ist, muß die KR über einen Zugriff auf das ECR geladen werden. Dadurch ergibt sich einer besonders effiziente hierarchische Cache-Struktur für KRs.
Auf Basis dieser Struktur ergeben sich auch mögliche Löschstrategien, die allerdings je nach Anwendung empirisch festgelegt werden sollten. Einige Möglichkeiten sind:
- Löschen des ältesten Einträge
- Löschen der kleinsten Einträge
- Löschen der größten Einträge
- Löschen der am seltensten abgerufenen Einträge

### Grundlage von CT-Hierarchien

Um einen Cache-Effekt zu erzielen, werden CTs zu einer Hierarchie in Baumstruktur zusammengeschaltet. Zwischen den einzelnen Knoten (CTs) befindet sich ein Bussystem (Inter-CT-Bus), daß jeweils einen oberen Knoten (CTs) mit mehreren unteren Knoten (CTs) verbindet. Dabei fordern untere Knoten (CTs) Daten von den oberen Knoten (CTs) an, die oberen Knoten senden die Daten daraufhin an die unteren Knoten. Die unteren Knoten tauschen untereinander Statusinformationen aus, dazu werden die Netzwerke zwischen den höheren Knoten verwendet, die entsprechend die Adressen auflösen müssen.

### CT-Hierarchie und Adressierung

CT-Hierarchien sind so angeordnet, daß zur Adressierung der einzelnen CTs ein Binärbaum verwendet werden kann. Das bedeutet, daß das niederwertigste Adressbit die einzelnen Blätter des Baumes kennzeichnet und jedes weitere Adressbit jeweils eine Hierarchieebene höher selektiert. Jede CT besitzt damit eine eindeutige Adresse.

Die nachfolgende Tabelle zeigt, wie die einzelnen Adressbits den jeweiligen Ebenen zugeordnet sind:

| ***3*** | ***2*** | ***1*** | ***0*** | | ***Address- width*** |
|---|---|---|---|---|---|
| - | - | - | * | Ebene 0: Blätter | 1 |
| - | - | * | * | Zwischenebene 1 | 2 |
| - | * | * | * | Zwischenebene 2 | 3 |
| * | * | * | * | Zwischenebene 3 | 4 |
| | | | | . . . | |
| * = verwendete Adressbits | | | | | |
| - = nicht verwendete Adressbits | | | | | |

Soll einer Gruppe von CTs eine übergeordnete CT zugeordnet werden, werden mehrere Adressbits der Gruppe entsprechend zusammengefaßt.

Die nachfolgende Tabelle zeigt, wie die einzelnen Adressbits den jeweiligen Ebenen zugeordnet sind, dabei befindet sich auf Ebene 0 eine Gruppe mit 8 CTs (Adresbit 2..0):

| ***5*** | ***4*** | ***3*** | ***2... 0*** | | ***Address width*** |
|---|---|---|---|---|---|
| - | - | - | * | Ebene 0: Blätter | 3 |
| - | - | * | * | Zwischenebene 1 | 4 |
| - | * | * | * | Zwischenebene 2 | 5 |
| * | * | * | * | Zwischenebene 3 | 6 |
| | | | | . . . | |
| * = verwendete Adressbits | | | | | |
| - = nicht verwendete Adressbits | | | | | |

Der Aufbau des Binärbaumes kann eindimensional oder mehrdimensional erfolgen, indem pro Dimension ein Binärbaum aufgebaut wird.

Eine bestimmte CT (TARGET) wird adressiert, indem die initierende CT (INITIATOR) entweder die exakte Zieladresse angibt, oder TARGET relativ adressiert.

Die Auswertung einer relativen Adresse wird im folgenden nähers beschrieben:

Beispiel eines relativen Adressfeldes für eine zweidimensionale Adressierung:

| ***15*** | ***14*** | ***13*** | ***12*** | ***11*** | ***10*** | ***9*** | ***8*** | ***7*** | ***6*** | ***5*** | ***4*** | ***3*** | ***2*** | ***1*** | ***0*** |
|---|---|---|---|---|---|---|---|---|---|---|---|---|---|---|---|
| Higher CT | Broad-cast | +/- Y-Address | | | | | | | +/- X-Address | | | | | | |

Bit15 ist gesetzt, wenn die CT der nächsthöheren Hierarchiestufe selektiert werden soll.
Bit14 kennzeichnet Broadcasts, selektiert also alle CTs. Die X/Y-Adressen geben die Adresse von TARGET ausgehend von der Adresse von INITIATOR an.

Die Adressen sind vorzeichenbehaftete "signed" Integer-Zahlen. Durch Addition der Y/X-Addressen des Adressfeldes zu der aktuellen Adressposition, wird TARGET bestimmt. Jede Ebene besitzt eine bestimmte Adressbreite (Addresswidth). Die Addierer entsprechen dieser Breite.
Ein Über- oder Unterlauf bei der Addition bedeutet, daß die adressierte CT nicht unterhalb des aktuellen Knotens liegt und die Adressanforderung wird an die darüberliegende CT (den nächsthöheren Knoten) weitergegeben.
Tritt kein Über- oder Unterlauf auf, befindet sich TARGET unterhalb des aktuellen Knotens. Das auf der aktuellen Ebene berechnete Adressbit (vgl. Tabellen) selektiert den direkt unter dem aktuellen Knoten liegende CT. Von dieser aus wird jeweils anhand des entsprechend berechneten Adressbits die nächst tiefere CT (Knoten) selektiert.

### Priorisierung von Zugriffen in CT-Hierarchien

Die Zugriffe auf den Inter-CT-Bus werden von einem Arbiter verwaltet. Dabei sind alle unteren Knoten gleich priorisiert. Der obere Knoten besitzt eine höhere Priorität. Dadurch sind Zugriffe, die von einem höheren Knoten nach unten übertragen werden, oder bereits einen weiten Weg vom INITIATOR aus zurückgelegt haben anderen Zugriffen überlegen.

### Der Grundaufbau einer CT

Die nachfolgende Übersicht über die CT gibt einen Überblick über die einzelnen Baugruppen. Die detailierte Beschreibung der Baugruppen wird im folgenden gegeben.

Kern einer CT ist die Steuer-Statemachine (CTS) die sämtliche Abarbeitungen von Konfigurationsroutinen (KRs). steuert. Der CTS zugeordnet ist, der Garbage-Kollektor (GC), der das Entfernen von KR aus dem Speicher (CTR) der CT steuert; das FILMO, das die Verwaltung der noch abzuarbeitenden KWs übernimmt und die LOAD-Statemachine, die das Laden von KRs steuert.

Der Speicher (CTR) ist als gewöhnlicher Schreib-Lese-Speicher ausgestaltet, wobei alle technisch möglichen Implementierungen zum Einsatz kommen können, und wird zur lokalen Speicherung von KRs für die jeweilige CT und deren untergeordnete CTs verwendet. Als Sonderfall kann der Speicher (CTR) auch als ROM, EPROM, EEPROM, Flash-ROM o.ä. ausgestaltet sein, um den Baustein mit einer festen, ASIC oder PLD-ähnlichen (siehe Stand der Technik) Funktion zu versehen.

Zur Generierung der CTR-Adressen werden vier als ladbare Zähler ausgestaltete Pointer verwendet:
1. Free-Pointer (FP). Zeigt auf den ersten freien Speicherplatz hinter der letzte KR im CTR.
2. Garbage-Pointer (GP). Zeigt auf einen durch den Garbage-Kollektor (GC) zu entfernenden Eintrag aus dem CTR.
3. Move-Pointer (MP). Zeigt auf eine Speicherstelle im CTR, von der ein gültiges, nicht zu entfernendes Konfigurationswort (KW), also einen Eintrag eines KR, an den durch GP definierten Eintrag kopiert/bewegt wird.
4. Program-Pointer (PP). Zeigt auf das momentan von der CTS ausgeführten KW.

KW werden über ein Ausgabe-Interface (OUT) an die zugehörenden CELs weitergegeben. Die CELs quittieren (ACCEPT), sofern sie sich in einem umkonfigurierbaren Zustand befinden den Empfang der KW. Wird ein KW nicht quittiert (REJECT), wird es in einem FIFO-ähnlichen Speicher (FILMO), zeitweise zwischengespeichert, um zu einem späteren Zeitpunkt, ohne den Program-Pointer zu benutzen, erneut an die adressierte CEL geschrieben zu werden.

Eine Aufforderung zur Abarbeitung eines KR erhält die CTS durch Triggersignale. Die Triggersignale durchlaufen eine Maske, das ist ein Filter, der unerwünschte Trigger ausfiltert (ausmaskiert). Eine Maske kann nach dem Stand der Technik durch UND-Gatter (AND) aufgebaut werden, die einen Trigger mit einem Freigabe-Signal UND-verknüpft. Die Trigger werden über einen priorisierten Round-Robin-Arbiter (SCRR-ARB) in Binärsignale umgewandelt. Ein priorisierter Round-Robin-Arbiter verknüpft den Vorteil der Gleichberechtigung eines Round-Robin-Arbiters mit der Erkennung der nächsten Freigabe in einem Takt, also dem Vorteil eines Prioritäts-Arbiter.
Die maskierten Trigger werden als Adresse auf eine erste Lookup-Tabelle (LUT1) geschaltet, das ist ein Speicher, der dem als Adresse eingehenden Trigger das ID der betreffenden KR zuordnet und auf den Datenleitungen ausgibt.
In einer zweiten Lookup-Tabelle (LUT2) wird die ID der KR der Adresse des Speicherplatzes der KR im CTR zugeordnet. Die zweite Lookup-Tabelle wird nicht nur zur Zuordnung von Trigger-Signalen verwendet, vielmehr benutzen Befehle, die eine ID als Parameter verwenden, die LUT2 ebenfalls zur Adresszuordnung.
Die Zuordnung der Trigger-Signale zu den betreffenden IDs wird über den nachfolgend beschriebenen Befehl "REFERENCE" in die LUT1 eingetragen. Die Verwaltung der LUT2, also die Zuordnung der IDs zu den Adressen im CTR, geschieht automatisch durch die CTS und den GC.

Zum besseren Verständnis der CT ist im folgenden ein möglicher Grundbefehlssatz dargestellt:
1. BEGIN <ID>
   Durch BEGIN <ID> wird der Anfang einer Konfigurationsroutine gekennzeichnet. <ID> gibt die eindeutige Identifikationsnummer der Konfigurationsroutine an.
2. STOP
   Durch STOP wird das Ende einer Konfigurationsroutine gekennzeichnet. An dieser Stelle beendet die Konfigurationstabelle (CT) die Abarbeitung der Konfigurationsroutine. Der Garbage-Kollektor (GC) beendet das Entfernen von Einträgen dieser Konfigurationsroutine.
3. EXECUTE <ID>
   Springt zum Beginn (BEGIN <ID>) einer Konfigurationsroutine. Ist diese Routine nicht im Speicher der CT vorhanden, so wird sie von der darüberliegenden CT angefordert, bzw. aus dem Speicher geladen.
4. LOAD <ID>
   Fordert die KR <ID> von der darüberliegenden CT an.
5. REMOVE <ID>
   Ruft den GC auf, um die Konfigurationsroutine <ID> von BEGIN <ID> bis STOP aus dem Speicher der CT zu entfernen und die nachfolgenden Konfigurationsroutinen so weit vorzuschieben, daß kein Speicherloch durch die entfernte Konfigurationsroutine entsteht.
6. PUSH <FQRCED> <ADDRESS> <DATA> <EXIT>
   Schreibt die Konfigurationsdaten <DATA> an das Register <ADDRESS>. Ist <FORCED> gesetzt, werden die Daten auch geschrieben, wenn das RECONFIG-Flag des betreffenden Zielregisters nicht gesetzt ist. <EXIT> wird verwendet und anzuzeigen, daß es sich um ein KWR handelt, das bei einem REJECT die weitere Ausführung der nachfolgenden KWRs abbricht.
7. MASK <SR> <TRIGGER>
   Setzt die Trigger-Maske mit <TRIGGER>, bzw. setzt sie mit <TRIGGER> zurück, abhängig von <SR> (Set/Reset).
8. WAIT <UNMASKED> <TRIGGER>
   Hält die Abarbeitung der Konfigurationsroutine an und wartet auf den Trigger <TRIGGER>. Ist <UNMASKED> gesetzt, wird auf das erwartete Trigger unabhängig des Zustandes der Trigger-Maske reagiert.
9. TRIGGER <TRIGGER><CT#>
   Sendet den Binärwert eines Triggers an die übergeordnete durch CT# adressierte CT.
10. GETBUS/GETCTS
   Baut eine Verbindung zu dem Inter-CT-Bus auf.
11. LOOSEBUS/LOOSECTS
   Löst die Verbindung zum Inter-CT-Bus auf.
12. REFERENCE <TRIGGER><ID>
   Schreibt in die LUT1 bei Adresse <TRIGGER> den Wert <ID>, wodurch einem Triggersignal eine bestimmte KR zugeordnet wird.

Die Befehle EXECUTE, LOAD, REMOVE, PUSH, MASK, WAIT, TRIGGER, REFERENCE sind nur innerhalb der Klammer BEGIN ... STOP gültig. Außerhalb dieser Klammer werden die Befehle nicht ausgeführt.

Der Aufbau einer Konfigurationsroutine (KR) sieht wie folgt aus:
BEGIN <ID>;
...
gültige Befehle
...
STOP;

### Indirekte Addressierung (Referenzierung)

Das Cache-Prinzip der CT ermöglicht das Zwischenspeichern einer KR in einer CT, wobei die KR von mehreren unterschiedlichen tieferliegenden CTs oder CELs genutzt werden.
Werden von den tieferliegenden Einheiten Zugriffe auf das externe Interface des Bausteines (z.B. RAM, Peripherie) durchgeführt, ergibt sich die Notwendigkeit unterschiedliche Adressen oder Teile des externen Interfaces zu speichern. Dadurch würde sich der Inhalt der einzelnen benötigten KRs grundlegend unterscheiden. Ein Caching ist nicht mehr möglich.
Abhilfe schafft eine indirekte Referenzierung. Dazu werden spezielle KR (im folgenden IKR genannt) verwendet, die die notwendigen externen Parameter beinhalten und setzen. Eventuell werden über Trigger andere unterschiedliche KRs in verschiedenen Hierarchieebenen aufgerufen. Ab Ende einer IKR wird das eigentliche KR aufrufen. Lediglich die IKR sind nicht cachebar, während die aufgerufenen KR durchaus einheitlich und daher cachebar sind. Es ist sinnvoll, die Größe der IKR auf das absolute Minimum zu reduzieren, nämlich ausschließlich die externen und unterschiedlichen Parameter und den Aufruf der einheitlichen KR.
Eine indirekte Konfigurationsroutine (IKR) ist wie folgt aufgebaut:
BEGIN <ID>;
...
xxx; gültige Befehle, wobei lediglich externe Peripherie angesteuert werden sollte,
TRIGGER <ID>; Start-, Stop- oder Lade-Anforderungen an Periphere Prozesse
...
GOTO <ID>; Sprung zur einheitlichen KR
STOP;

### Sonderfälle:

### 1. WAIT_FOR_BOOT

Dieses Kommando ist nur an der ersten Adresse des CTR gültig. Während des Boot-Vorganges wird zuächst die komplette Boot-KR in das CTR geschrieben, jedoch nicht die Beginnsequenz des Boot-KR BEGIN <0>. An dessen Stelle (auf Adresse 1) steht WAIT-FOR-BOOT, das bei einem RESET automatisch gesetzt wird. Erst nachdem die gesamte Boot-KR in das CTR geschrieben ist, wird WAIT_FOR_BOOT mit BEGIN <0> überschrieben und die CTS beginnt mit der Abarbeitung der Boot-KR.
WAIT_FOR_BOOT darf nicht innerhalb eines Programmes auftreten.

### 2. BOOT <CT-ID>

BOOT <CT-ID> kennzeichnet in welche CT die nachfolgende Boot-KR geschrieben werden soll. Nach BOOT <CT-ID> folgt kein BEGIN, die Boot-KR wird nciht durch STOP, sondern durch ein nachfolgendes BOOT <CT-ID> abgeschlossen. Ein STOP beendet den Bootvorgang.
BOOT <CT-ID> darf nicht innerhalb eines Programmes auftreten.

### Boot-Vorgang

Nach einem RESET lädt die CT des obersten Hierarchie-Levels (ROOT-CT) die Boot-KR in die CTs der unteren Hierarchien. Dazu existiert ein Sprung an eine festgelegte Adresse (BOOT-ADR) im, der ROOT-CT zugeordneten, externen Konfigurationsspeicher (ECR). Die ROOT-CT führt diesen Sprung durch und erreicht die Boot-Sequenz. Diese ist wie folgt aufgebaut:
BOOT <CT-ID0>; COMMAND; COMMAND; ...
BOOT <CT-ID1>; COMMAND; COMMAND; ...
...
BOOT <CT-IDn>; COMMAND; COMMAND; ...
STOP;
Während des Boot-Vorganges wird zunächst die komplette Boot-KR in das CTR ab Adresse 2 der durch <CT-ID> angegebenen CT geschrieben. Die Beginnsequenz des Boot-KR (BEGIN <0>) wird nicht auf Adresse 1 geschrieben. An dessen Stelle steht WAIT-FOR-BOOT, das bei einem RESET automatisch gesetzt wird. Erst nachdem die gesamte Boot-KR in das CTR geschrieben ist, und die ROOT-CT das nächste BOOT <CT-ID> erreicht hat, wird STOP an das Ende des Boot-KR in das CTR geschrieben und WAIT_FOR_BOOT mit BEGIN <0> überschrieben. Die CTS beginnt mit der Abarbeitung der Boot-KR.

### Laden einer Konfigurationsroutine

Es existierem drei Gundmechanismen um eine Konfigurationsroutine, außer der Boot-KR anzufordern:
1. Ausführen eines LOAD <ID> durch die CTS
2. Ausführen eines EXECUTE <ID> durch die CTS, wobei die KR mit der betreffenden ID nicht im CTR vorhanden ist.
3. Auftreten eines Triggers, der über die LUT1 auf einen <ID> übersetzt wird, dessen zugehörige KR nicht im CTR vorhanden ist.

### Der Ablauf in allen drei Fällen ist derselbe:

Die ID der angeforderten KR wird der LUT2 als Adresse angegeben. Die LUT2 überprüft, ob eine gültige Adresse im CTR existiert. Existiert diese nicht, d.h. <ID> zeigt in der LUT2 auf den Wert 0, wird load <ID> an die CTS gesendet.
Die CTS fordert daraufhin die <ID> betreffende KR bei der hierarchisch übergeordneten CT an. Diese Anforderung erreicht die übergeordnete CT in Form eines Triggers und wird entsprechend von ihr ausgewertet.
Die übergeordnete CT sendet die angeforderte KR an die anfordernde CT. Die Daten werden ab der Adresse, auf die der FREE-POINTER (FP) zeigt in das CTR geschrieben, wobei der FP nach jedem Schreibzugriff um eins erhöht wird.
Erreicht der FP die obere Grenze des CTR, wird der Garbage-Kollektor (GC) aufgerufen, um die unterste KR innerhalb des CTR zu entfernen und das CTR zu komprimieren. Der FP wird dabei neu gesetzt. Dieser Vorgang findet so lange statt, bis die zu ladende KR komplett in das CTR paßt.

### Sprungtabelle im Konfigurationsspeicher

Der der ROOT-CT zugeordnete Konfigurationsspeicher beinhaltet sämtliche KR, die für eine Applikation geladen werden müssen. Im externen Konfigurationsspeichers (ECR) befindet sich an einer festgelegten Adresse (ADR-BOOT) Sprung zu der Boot-Konfigurations-Routine. In einem weiteren festgelegten Speicherbereich (LUT-ECR) beliebiger, jedoch innerhalb einer Applikation fest vorgegebener Länge die Sprünge zu den einzelnen KRs. Dabei wird die <ID> der jeweiligen KR als Adresse im ECR verwendet, an der die Startadresse der jeweiligen KR steht; wodurch KRs indirekt adressiert werden:
ID -> LUT-ECR -> KR

### Änderung der KR im Konfigurationsspeicher

Die KR mit der ID <A> soll geändert werden. Zunächst schreibt der HOST die neue KR für die ID <A> an eine freie Speicherstelle im ECR. Die ID <A> wird zusammen mit der neuen Adresse der KR im Konfigurationsspeicher von der übergeordneten Einheit (HOST) in ein dafür vorgesehenes Register der ROOT-CT geschrieben. Die ROOT-CT sendet an alle darunterliegenden CTs das Kommando REMOVE <A>. Daraufhin entfernen alle CTs beim Erreichen eines STOP oder während IDLE-Zyklen, also sobald keine KR ausgeführt wird, die auf diese ID bezogene KR aus dem CTR und setzen die LUT2 an Adresse <A> auf "NoAdr", das bedeutet, es existiert keine gültiger Adresseintrag für ID <A> in LUT2. Wird die ID <A> erneut angefordert, zwingt der fehlende Eintrag ("NoAdr") an Stelle <A> in die LUT2 jede CT die KR <A> vom ECR neu anzufordern.

### Das FILMO

Ein KR besteht hauptsächlich aus dem Befehl PUSH, der neue Konfigurationsworte an eine bestimmte Adresse schreibt. Ist das Schreiben eines Konfigurationswortes des Types KW nicht möglich, da das adressierte konfigurierbare Element (CEL) nicht bereit ist eine neue Konfiguration zu empfangen (REJECT), wird das Konfigurationswort statt an das adressierte konfigurierbare Element (CEL) in einen Speicher, im folgenden FILMO genannt, geschrieben. Die nachfolgenden Befehle werden normal abgearbeitet, bis erneut ein Konfigurationswort nicht geschrieben werden kann, das dann in das FILMO geschrieben wird.

Ist das Schreiben eines Konfigurationswortes des Types KWR nicht möglich, da das adressierte konfigurierbare Element (CEL) nicht bereit ist eine neue Konfiguration zu empfangen (REJECT), wird das Konfigurationswort statt an das adressierte konfigurierbare Element (CEL) in einen Speicher, im folgenden FILMO genannt, geschrieben. Alle nachfolgenden Befehle bis zum Ende der KR werden nicht an die CEL, sondern direkt in das FILMO geschrieben.

Das FILMO wird in IDLE-Zyklen und vor jedem Ausführen eines neuen KR komplett durchlaufen. Dabei wird, beginnend beim ältesten Datenwort, entsprechend eines FIFOs nach dem Stand der Technik, jedes ausgelesene Wort des FILMOs an sein adressiertes Element zu senden; dabei muß das adressierte Element bereit sein das Konfigurationswort zu empfangen. Sofern die Datenwörter von Beginn an geschrieben werden können (d.h. die adressierten konfigurierbaren Elemente (CELs) sind bereit) wird der Eintrag aus dem FILMO nach Art eines FIFOs entfernt. Kann ein Konfigurationswort nicht geschrieben werden, wird es übersprungen und nicht aus dem FILMO entfernt. Im Gegensatz zu einem FIFO werden die Daten nach dem übersprungenen Konfigurationswort weiter ausgelesen. Konfigurationsworte, die nach einem übersprungenen Konfigurationswort geschrieben werden können werden entweder je nach Implementierung des FILMOs
1. als geschrieben markiert und nicht aus dem FILMO gelöscht, wobei als geschrieben markierte Konfigurationswörter bei den folgenden Durchläufen nicht mehr gelesen werden, bzw. sofort gelöscht werden, sofern kein übersprungenes Konfigurationswort mehr vor ihnen liegt;
   oder
2. aus dem FILMO gelöscht, wobei die Konfigurationswörter vor und nach dem gelöschten Konfigurationswort erhalten bleiben, dabei müssen zum Löschen die nachfolgenden Worte nach vorne (oben) oder die davorliegenden Worte nach hinten (unten) geschoben werden, wobei die Reihenfolge der Konfigurationsworte unbedingt beibehalten wird.

Wird eine neue KR ausgeführt, werden die Konfigurationsworte (KW), die von der CTS nicht an die adressierten Elemente (CELs) geschrieben werden konnten, erneut an das FILMO angehängt, d.h. die KW werden an das Ende (aus Leserichtung) des FILMOs geschrieben. Ist das FILMO voll, d.h. es existieren keine freien Einträge für Konfigurationsworte, wird die Ausführung des KR gestoppt. Das FILMO wird so lange durchlaufen, bis genügend Konfigurationsworte geschrieben werden konnten und entsprechend viele freie Einträge entstanden sind, woraufhin das KR weiter abgearbeitet wird.
Das FILMO stellt einen FIFO-ähnlichen Speicher dar, der immer vom ältesten Eintrag an linear durchlaufen wird, im Gegensatz zu einem FIFO werden jedoch Einträge übersprungen (First In Linear Multiple Out).

### Die Funktion der Konfigurationstabellen-Statemachine (CTS)

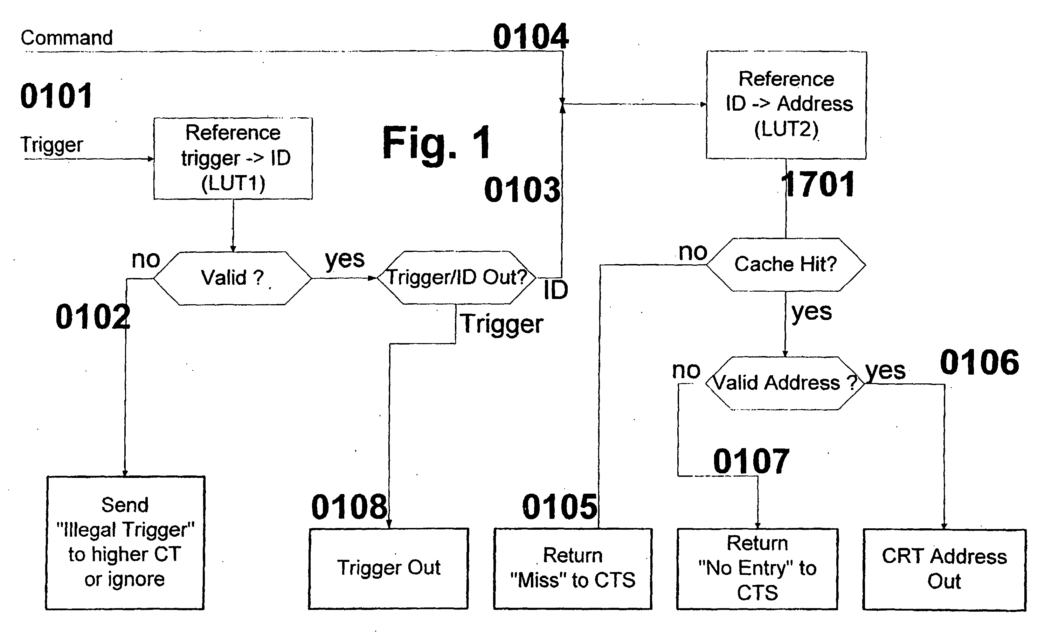

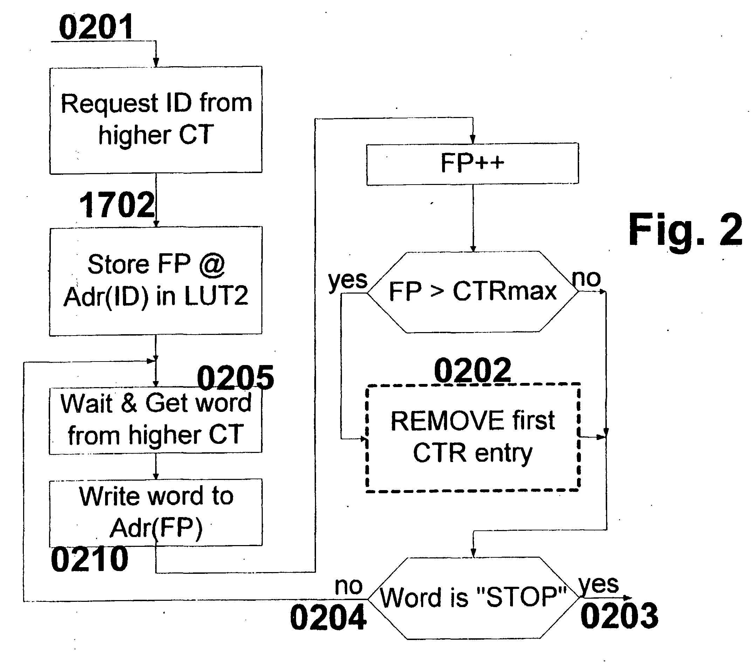

Die Konfigurationstabellen-Statemachine (CTS) übernimmt die Steuerung der CT. Dabei führt sie die Befehle der KR aus und reagiert auf eingehende Trigger. Sie übernimmt die Verwaltung des FILMOs, i.b. liest sie in IDLE-Zyklen und vor dem Ausführen einer KR das FILMO aus.
Sie reagiert auf die von der LUT-Struktur generierten Signalen illegal <TRG> (Illegal Trigger, siehe Fig. 1, 0102) und load <ID>. load <ID> wird generiert, wenn ein Cache-Miss in LUT2 vorliegt (0105), oder die durch ID referenzierte KR/IKR als gelöscht markiert wurde (0107). Sie reagiert auf die Steuersignale der übergeordneten CT.
Ein Implementationsbeispiel für die Verarbeitung der Befehle ist in den Figuren 2 bis 7 dargestellt.

Steuersignale an übergeordnete CTs
- illegal <TRG> (0102)
   Zeigt der übergeordneten CT an, daß ein unbekannter Trigger <TRG> aufgetreten ist.
- load <ID> (0105/0107)
   Fordert die übergeordneten CT zum Laden der <ID> auf.
- trigger <TRG> <CT#> (0108)
   Sendet einen Trigger <TRG> an die übergeordnete oder
   an die adressierte CT <CT#>.

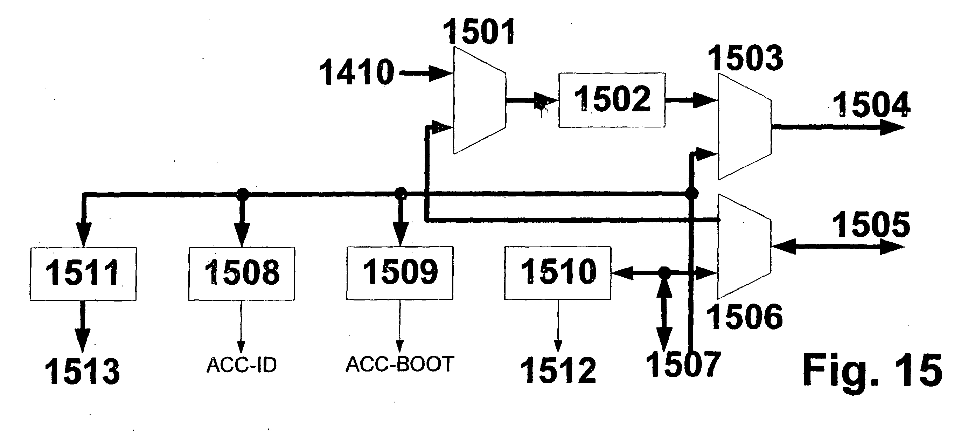

Steuersignale von übergeordneten CTs
- remove <ID> (siehe Fig. 15, 1513)
   Fordert die CT zum löschen der <ID> auf.
- write_to_FP <data> (siehe Fig. 2, 0205)
   Sendet Daten an die CT. Die Daten werden an das Ende des belegten Speichers angehängt.

### Die Funktion des Garbage-Kollektors (GC)

Der CTR unterliegt zwei Problemen:
1. Verweist ein LOAD- oder EXECUTE-Befehls, bzw. ein Trigger, auf eine ID, deren KR nicht im CTR vorhanden ist, muß die KR nachgeladen werden. U.U. ist jedoch nicht genügend Platz im CTR vorhanden um die angeforderte KR zu laden.
2. Beim Auftreten eines REMOVE <ID> ist die entsprechende KR aus dem CTR zu entfernen. Dabei entsteht, sofern sich die KR nicht am Ende des CTR befindet eine Lücke. Beim Laden einer neuen KR wird die Lücke u.U. nicht wieder ganz aufgefüllt oder die Lücke ist zu klein für die neue KR. Dies führt zu einer Fragmentierung des CTR. Die Aufgabe des Garbage-Kollektor ist es, KR aus dem CTR zu entfernen, um Platz für neue Einträge zu schaffen UND nach Entfernen der Einträge den CTR so umzuorganisieren, daß alle verbleibenden KR als geschlossener Block hintereinander im Speicher liegen und die freigewordenen Speicherblöcke als ein geschlossener Block an einem Ende des CTR liegen.
Dadurch können auf optimale Weise und ohne Verluste an Speicherplatz neue KR nachgeladen werden.

### Auswerten von Triggerimpulsen

Jede CT besitzt einen Anschluß an mehrere zu ihrer jeweiligen Hierarchieebene gehörenden Triggersignale, die zu einem Bus zusammengefaßt sind. Eingehende Trigger werden über eine Maske ausgewertet, d.h. nur die freigeschalteten Triggersignale werden weitergeleitet. Die freigeschalteten Triggersignale werden taktsynchron in einem Sample-Register zwischengespeichert (gesampled). Ein Arbiter wählt eines der gespeicherten Triggersignale aus und wandelt das Signal in einen binären Vektor. Das gewählte Triggersignal wird aus den Sample-Register gelöscht. Der Binärvektor wird an eine erste Lookup-Tabelle (LUT1) weitergeleitet, die den Binärvektor in die Identifikationsnummer (ID) der aufzurufenden Konfigurationsroutine (KR) übersetzt.
Die ID wird in einer zweiten Lookup-Tabelle (LUT2) in die Adresse der KR im CT-Speicher (CTR) übersetzt. Die CT-Statemachine (CTS) setzt ihren Programm-Pointer (PP) auf diese Adresse und beginnt mit der Ausführung der KR. Voraussetzung ist, daß jeder über die Maske freigeschaltete Trigger einen entsprechenden Eintrag in LUT1 besitzt. Fehlt dieser, wird ein Fehlerzustand an die CTS weitergeleitet (illegal trigger), dabei wird jede ID = "NoAdr" als nicht vorhandener Eintrag gewertet. "NoAdr" ist ein implementationsabhängig gewähltes Token.
Fehlt der Eintrag in LUT2, d.h. die auf die ID bezogene KR befindet sich nicht im CTR, wird eine Ladeanforderung an die CTS gesendet (load <ID>).

### Senden von Triggerimpulsen an die übergeordnete CT

Neben der bereits beschriebenen Schnittstelle zu einer übergeordneten CT zum Laden von KR existiert eine weitere Schnittstelle zum Austauschen von frei definierbaren Befehlen, insbesondere jedoch Triggervektoren. Dabei sendet eine CT
- entweder an alle anderen CTs einen Befehl (BROADCAST)
- oder an eine beliebige adressierte CT einen Befehl (ADDRESSED)

Der Befehl "Triggervektor" stellt einen Binärwert dar, der auf einen Eintrag in der LUT2 der empfangenden CT referenziert.
Das Senden von Triggervektoren ist notwendig um beispielsweise innerhalb einer IKR eine KR in einer weiteren CT zu starten um beispielsweise die Peripherie oder den Speicher anzusteuern.

Zur Weiterleitung von Triggervektoren an eine übergeordnete CT existieren 2 Mechanismen:
1. Der LUT1 wird ein Bit hinzugefügt, das angibt, ob der Inhalt des Speichers als KR ID oder als Binärwert für einen Triggerimpuls betrachtet wird. Liegt ein Triggerimpuls vor, wird der Dateninhalt von LUT1 direkt als Trigger an die übergeordnete CT gesendet.
2. Mit dem Befehl TRIGGER kann der Binärwert eines Triggers angegeben werden, der direkt an die übergeordnete CT gesendet wird. (Alternativ könnten statt einem Triggerwert auch direkt IDs übertragen werden).

Zum Starten einer KR in einer fremden CT über Triggervektoren muß zum Erreichen der Deadlockfreiheit ein Synchronisationsverfahren geschaffen werden. Das Verfahren muß beachten, daß lediglich eine KR innerhalb eines bestimmten Gruppe von CTs weitere KR auf anderen CTs innerhalb dieser Gruppe startet. Das Starten mehrere KR gleichzeitig kann zu einem Deadlock zwischen den CTs führen, ähnlich des bereits beschriebenen Deadlocks auf der CEL-Ebene.

Das Grundprinzip eines solchen Verfahrens läuft wie folgt ab:

Ein KR ist wie folgt aufgebaut:
...
GETCTS/GETBUS
TRIGGER <ID>, <CT#>
TRIGGER <ID>, <CT#>
...
LOOSECTS/LOOSEBUS
...

Der Befehl "GETCTS" innerhalb einer KR einer CT (INITIATOR) zeigt an, daß im folgenden Signale an andere CTs (TARGET) gesendet werden. Mit Trigger <ID>, <CT#> wird die ID einer zu startenden KR an die CT mit der eindeutigen ID CT# gesendet. Das Senden des Triggers geschieht dabei zunächst an die direkt übergeordnete CT, die entsprechend der CT# den Trigger an eine wiederum untergeordnete CT innerhalb ihres CT-Raumes sendet oder an die ihrerseits übergeordnete CT (siehe CT-Hierarchien). Erreicht der Befehl die TARGET quittiert diese den Empfang.
Beim Durchlauf des Befehls durch eine CT wird eine Prioritätskennung des Befehls jeweils um eines erhöht. Trifft die Weiterleitungsanforderung eines Befehls auf eine weitere Anforderung innerhalb einer CT, wird der Befehl mit der niedersten Priorität zurückgewiesen.
Dadurch wird
a) sichergestellt, daß innerhalb eines überschneidenden Systemes nur ein Befehl zu einer Zeit ausgebreitet wird und dadurch auch nur eine KR gestartet wird, was zu der geforderten Deadlockfreiheit führt,
b) sichergestellt, daß der bislang am wenigsten weit ausgebreitete Befehl zurückgewiesen wird, was zu einer Steigerung der Performance führen kann
Nach Zurückweisen eines Befehls, werden alle vorhergehenden Befehle innerhalb der GETCTS/LOOSECTS ebenfalls zurückgewiesen, d.h. INITIATOR sendet an alle TARGET das Signal DISMISS und die Ausführung der KR startet nach einer Wartezeit bei GETCTS erneut.
Die Quittierungen aller Trigger innerhalb eines Befehlsabschnittes GETCTS ... LOOSECTS werden an die INITIATOR-CT gesendet. Bei jeder eintreffenden Quittierung wird die Verarbeitung des nächsten Befehls fortgesetzt.
Bei Erreichen des Befehls LOOSECTS sendet INITIATOR an alle TARGET das Signal GO. Dadurch starten die TARGET-CTs die Ausführung der KR mit der von Trigger übertragenen ID.
TARGETs wechseln nach Auftreten eines Triggers in einen Zustand, in welchem sie auf das Auftreten eines GO oder DISMISS Signales warten.

Aufgrund der besseren Implementierbarkeit wird weiterhin ein leicht modifiziertes Verfahren vorgestellt:
Zwischen den CTs einer Gruppe einer Hierarchieebene befindet sich ein Bussystem (Inter-CT-Bus). Dieses Bussystem verbindet alle CTs der Gruppe und eine direkt der Gruppe übergeordnete CT.
Durch den Befehl GETBUS, der funktionell GETCTS ähnlich ist, wird das Bussystem von einer CT arbitriert. Die Befehle werden über das Bussystem an die CTs derselben Gruppe weitergeleitet. Befindet sich die adressierte CT# nicht innerhalb der Gruppe, wird durch die übergeordnete CT automatisch deren übergeordneter Bus arbitriert und der Befehl weitergeleitet. Die arbitrierten Busse bleiben INITIATOR zugeordnet und somit für alle anderen CTs gesperrt, bis entweder eine Zurückweisung erfolgt, oder der Befehl LOOSEBUS den Bus auflöst. LOOSEBUS ist mit LOOSECTS vergleichbar. Vor Ausführen des Befehls LOOSEBUS wird das GO-Signales an alle beteiligten Cts gesendet. Dies erfolgt entweder durch den Befehl LOOSEBUS oder einen speziellen vorgeschalteten Befehl. Befehle, i.b. Trigger werden ebenfalls gemäß des bereits beschriebenen Grundverfahrens verarbeitet. Eine Zurückweisung erfolgt, wenn ein Bussystem nicht arbitriert werden kann. Beim Arbitrieren sind die CTs einer Ebene jeweils gleich priorisiert, die übergeordnete CT besitzt eine höhere Priorität.
Beim Senden eines Befehls über den Inter-CT-Bus bleibt der Befehl so lange aktiv, bis die adressierte CT den Befehl akzeptiert (ACCEPT) oder zurückweist (REJECT).

### Der priorisierte Round-Robin-Arbiter

Der priorisierte Round-Robin-Arbiter (Single-Cycle-Round-Robin-Arbiter SCRR-ARB) ist taktsynchron aufgebaut, d.h. bei jeder - je nach Implementierung positiven oder negativen - Taktflanke (TF1) liefert er ein Ergebnis. Die eingehenden Signale (ARB-IN) durchlaufen eine Maske (ARB-MASK), die von dem Arbiter gemäß dem nachfolgend beschriebenen Verfahren selbst verwaltet wird. Die Ausgangssignale der Maske werden an einen Prioritätsarbiter (ARB-PRIO) nach dem Stand der Technik geleitet. Der Arbiter liefert taktsynchron bei jeder Taktflanke (TF1) ein Ergebnis (ARB-OUT), d.h. den Binärwert des höchstpriorisierten Signals nach der Maske (ARB-MASK). Dem Ergebnis zugeordnet ist ein Signal (VALID), das angibt, ob der Binärwert gültig oder ungültig ist. Abhängig von der Implementierung der Prioritätsarbiters ist es möglich, daß beim Anliegen des Signals 0 und beim Anliegen keines Signals derselbe Binärwert generiert wird: In diesem Fall zeigt VALID an, daß das Ergebnis ungültig ist, sofern kein Signal anliegt. Dieses Signal wird
1. als Ergebnis der Arbiters ausgegeben
   und
2. auf einen Dekoder geschaltet, der die Binärwerte - wie in der folgenden Tabelle beispielsweise für einen 3-bit Binärwert angeben - auskodiert. (Das Kodierungsverfahren ist gemäß dieses Prinzips auf jeden beliebigen Binärwert anpaßbar):

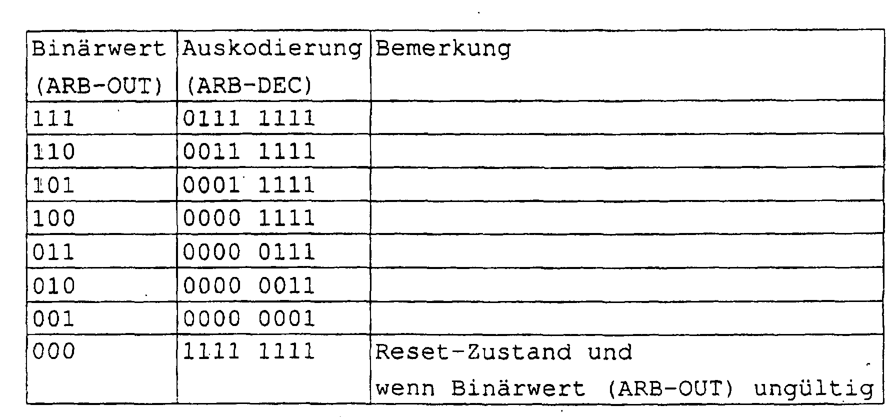

Dem Dekoder zugeordnet ist ein Register (ARB-REG), das die auskodierten Werte (ARB-DEC) des Dekoders bei der zu TF1 inversen Taktflanke (TF2) übernimmt. ARB-DEC wird auf die Maske (ARB-MASK) zurückgekoppelt und schaltet die einzelnen Eingangssignale (ARB-IN) frei.

Der funktionale Ablauf im Arbiter ist wie folgt:
1. Nach einem RESET sind alle ARB-IN über ARB-MASK freigeschaltet, da ARB-DEC alle Signale auf "Freigabe" stellt.
2. Das höchst priorisierte gesetzte ARB-IN (beispielsweise besitzt in der obigen Tabelle das Signal 7 (binär 111) die höchste Priorität und 0 (binär 000) die niederste Priorität) wird als Binärwert ausgegeben.
3. Über ARB-DEC wird das Signal gesperrt, sowie alle weiteren Eingänge die evtl. noch höher priorisiert wären, aber nicht gesetzt sind.
4. Die folgenden Schritte 5 und 6 wiederholen sich so lange, bis das Signal 0 (binär 000) erreicht ist, oder kein Signal hinter ARB-MASK mehr anliegt. Dann schaltet ARB-DEC (siehe Auskodierungstabelle) wieder alle Signale durch ARB-MASK über ARB-DEC frei und der Ablauf beginnt bei Schritt 2.
5. Das nunmehr höchst priorisierte gesetzte ARB-IN wird als Binärwert ausgegeben.
6. Über ARB-DEC wird das Signal gesperrt, sowie alle weiteren Eingänge die evtl. noch höher priorisiert wären, aber nicht gesetzt sind. (Weiter mit Schritt 4)

Dadurch wird erreicht, daß alle Eingangssignale gleichberechtigt behandelt werden und bei jedem Taktzyklus eines der Eingangssignale (ARB-IN) binär auskodiert und ausgegeben (ARB-OUT) wird.
ARB-REG kann mit einem Enable-Eingang (EN) versehen werden, der eine Änderung des Registerinhaltes nur bei TF2 zuläßt, wenn ein entsprechendes Signal anliegt. Dadurch wird nicht bei jedem Takt ein Binärvektor ausgegeben, sondern abhängig von einer Freischaltung durch EN und TF2. Der Eingang wird zur Synchronisation notwendig, wenn die nachgeordnete Schaltung die Verarbeitung nicht in einem Taktzyklus durchführen kann, sondern mehrere Zyklen benötigt und erst dann den nächsten Binärvektor akzeptiert.

Unter Umständen ist es sinnvoll eine Reihe von Signalen durch den Arbiter als höher priorisiert anzusehen, während die Mehrzahl der Signale gleichpriorisiert ist. Dies ist z.B. bei dem vorhergehend beschriebenen Verfahren zur Weiterleitung von Signalen zwischen CTs notwendig. Um ein Signal höher zu priorisieren, wird der höchstpriorisierte Anschluß des ARB-PRIO nicht maskiert, d.h. an der Maske (ARB-MASK) vorbeigeleitet. Dadurch wird das Signal bevorzugt behandelt.

### Aufbau einer CT auf Basis eines Mikrokontrollers

Abweichend von den bisherigen Beschreibungen kann eine CT auch in einer Mikrokontrollerarchitektur implementiert werden.
Es ist leicht einsehbar, daß die Grundfunktionen, wie Triggersteuerung, Lookup-Tabelle LUT1 und LUT2, sowie die Inter-CT-Kommunikation und das Schreiben der KW an die CEL ohne weiteres auch von einem Mikrokontroller ausgeführt werden können. Lediglich der Aufbau eines effizienten FILMOs stellt ein Problem dar, das sich vor allem in der erreichbaren Performance bemerkbar macht. Daher wird auf den Aufbau des FILMOs gesondert eingegangen.

### Aufbau des FILMOs

Der FILMO ist nicht als separater Speicher ausgestaltet. Vielmehr ist der gewöhnliche Programmspeicher um die FILMO-Funktionalität erweitert. Dazu wird ein zusätzliches Bit (FILMO-BIT) jedem KW zugeordnet, das anzeigt, ob das entsprechende KW in die CEL geschrieben wurde oder nicht. Ist FILMO-BIT gesetzt, wird das entsprechende KW nicht ausgeführt. Beim Schreiben eines Kws in den Speicher wird das FILMO-BIT zurückgesetzt. Alle KRs innerhalb einer CT werden über eine Verkettete-Liste (FILMO-LIST) in der Reihenfolge miteinander verbunden, wie sie durch Trigger oder LOAD<ID> aufgerufen wurden. Eine KR bleibt so lange in der FILMO-LIST, bis sie komplett ausgeführt wurde, dann wird sie aus der Liste entfernt. Die FILMO-LIST wird entsprechend des FILMO-Verfahrens durchlaufen und stellt damit einen direkten Ersatz für den FILMO-Speicher dar.
(Der Vollständigkeit halber sei angemerkt, daß entgegen des ursprünglichen FILMO-Verfahrens keine KR zweimal in der Liste vorkommen kann. Wird eine KR aufgerufen, die noch in der FILMO-LIST steht, muß deren Ausführung so lange verzögert werden, bis sie aus der FILMO-LIST entfernt wurde.)

Der Aufbau einer FILMO-Speicherstelle ist wie folgt:

| | |
|---|---|
| FILMO-BIT | KW |

### Befehle

Der Mikrokontroller unterstützt die folgenden Befehle, die direkten Einfluß auf das FILMO haben:
- PUSH: Schreiben eines KW an eine CEL
- PUSHSF: Schreiben eines KW an eine CEL und setzen des FILMO-BITs, wenn das KW angenommen (ACCEPT) wurde
- PUSHRET: Schreiben eines KW an eine CEL und Rücksprung (RETURN) aus der Unterroutine, wenn das KW nicht von der CEL angenommen wurde (REJECT). Dieser Befehl wird verwendet, wenn nachfolgende KW in der KR von der Konfiguration dieses KWs (ACCEPT) abhängig sind; durch den Rücksprung aus dem KR wird deren Konfiguration so lange verhindert, bis PUSHRET erfolgreich (ACCEPT) ist.
- PUSHNR: Schreiben eines KW an eine CEL, nur dann, wenn zuvor innerhalb der KR kein REJECT auftrat. Dient ähnlich wie PUSHRET dazu, Abhängigkeiten in der Konfigurationsreihenfolge von KWs zu handhaben.

### Garbage Kollektor

Entsprechend der bisherigen Beschreibung wird ein Garbage-Kollektor (GC) zum Entfernen von nicht mehr benötigten KRs benutzt. Der GC läuft an, wenn entweder der Platz zum Laden einer neuen KR im Speicher nicht mehr ausreicht und IDs entfernt werden müssen; oder eine KR explizit durch den Befehl REMOVE - mit der Angabe der ID der zu löschenden KR - gelöscht wird.
Um den GC-Lauf möglichst einfach zu gestalten, werden sämtliche KRs über eine verkettete Liste miteinander verbunden. GC läuft die Liste durch und entfernt die nicht mehr benötigten KR, indem sie von anderen KR überschrieben und die Listeneinträge entsprechend angepaßt werden. Dabei werden die alle verbleibenden KR im Speicher so verschoben, daß die durch die zu löschenden KR entstehende Speicherlücke geschlossen wird und am Ende des Speichers ein größerer zusammenhängender Freiraum entsteht.

### Aufbau einer KR

Ein möglicher Grundaufbau einer KR ist in der folgenden Tabelle dargestellt:

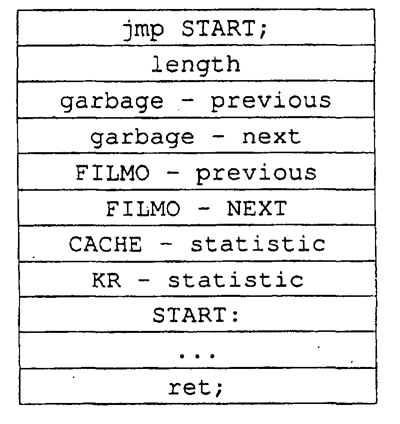

Zu Beginn der KR erfolgt ein Sprung über den folgenden Header hinweg zum Start der Befehlssequenzen. Es folgt die doppelt verkettete Liste für den Garbage-Kollektor, in der sämtliche KR miteinander verbunden sind. "length" gibt die Länge der KR an. Diese Information kann für Block-Move-Befehle nach dem Stand der Technik verwendet werden, die Anwendung finden, wenn die KR im Speicher bewegt werden müssen (Garbage, Load, etc.). In der anschließenden doppelt verketteten Liste ist der FILMO aufgebaut, wobei nur die KRs miteinander verbunden sind, die KWs enthalten, die noch nicht an die CEL geschrieben wurden.

Es folgt eine Statistik über das Cache-Verhalten, die beispielsweise die Anzahl der Aufrufe der KR (pro Aufruf wird der Wert um 1 erhöht), das Alter (anhand der Anzahl der GC-Läufe über die KR meßbar: pro GC-Lauf wird der Wert um 1 erhöht), etc. enthält. Diese Statistik kann der GC auswerten, wenn aus Speicherplatzgründen eine KR entfernt werden muß. Für das Cachen ergeben sich durch solche Statistiken erhebliche Vorteile. So kann beispielsweise abhängig vom verwendeten Cache-Algorithmus, entsprechend den Anforderungen der Applikation, der Mikrokontroller so programmiert werden, daß
1. die älteste/neueste KR
2. die kleinste/größte KR (s. Eintrag "length")
3. die am seltensten/am häufigsten aufgerufene KR aus dem Cache gelöscht wird, wenn freier Speicher benötigt wird. Dabei können selbstverständliche weitere sinnvolle Statusinformationen gespeichert werden. Ein derart selektives Cachen ist bei heute bekannten Cache-Strukturen nicht möglich. Insbesondere werden frei programmierbare Cachealgorithmen in Caches nach dem Stand der Technik nicht unterstützt.
Abschließend ist eine KR-Statistik vorhanden, die beispielsweise die Anzahl der noch nicht konfigurierten (REJECT) oder der konfigurierten (ACCEPT) KWs enthält. Gleichzeitig kann die Adresse des ersten noch zu konfigurierten KW gespeichert werden. Dies hat den Vorteil, daß bei einem FILMO-Durchlauf direkt auf das KW gesprungen werden kann und nicht das komplette KR durchlaufen werden muß, was zu einer erheblichen Performancesteigerung führt.
Abschließend sei zu den KR angemerkt, daß die verketteten Liste vorzugsweise durch Eintrag der
Vorgänger/Nachfolger-ID aufgebaut werden, da damit die absoluten Speicheradressen ohne Probleme vom GC verschoben werden können. Innerhalb einer KR sollten nur relative Sprünge anstatt absoluter Sprünge verwendet werden, um Probleme beim Laden der KR und bei GC-Läufen zu vermeiden, da sich die absolute Adressen dabei verändern.

Der Vollständigkeit halber soll noch erwähnt werden, daß gemäß dem bereits beschriebenen Prinzip auch beim Einsatz eines Mikrokontrollers vor dem Ausführen einer neuen KR (aufgrund eines Triggers oder Befehls, auch von einer anderen CT aus) der FILMO durchlaufen wird und vor Durchlauf des FILMOs der Zustand der CEL (umkonfigurierbar oder nicht) gesichert wird.

### Figuren

Die nachfolgend beschriebenen Figuren verdeutlichen anhand eines Implementationsbeispiels die Verwaltung von Konfigurationsdaten nach dem vorgestellten Verfahren:
Figur 1: Verfahren der Adressgenerierung innerhalb der Lookup-Tabellen
Figur 2-7 Abarbeitung der Befehle und Funktion der Statemachinen
Figur 8: Aufbau des SCRR-ARB
Figur 9: Aufbau der LUT1 & LUT2
Figur 10: Aufbau der Pointerarithmetik und des CTR
Figur 11: Aufbau eines FILMO
Figur 12a: Hierarchische Anordnung der CTs
Figur 12b: Senden eines Triggers zwischen den CTs
Figur 12c,d: Methoden zum Senden eines
Figur 13: Aufruf einer KR durch mehrere IKR
Figur 14: Aufbau der LUT1 einer ROOT-CT
Figur 15: Aufbau der HOST-Steuerung einer ROOT-CT
Figur 16: Verdeutlichung des LUT und ECR Konzeptes
Figur 17: Ablaufsteuerung einer CT mittlerer Hierarchieebene, bzw. einer ROOT-CT
Figur 18: Deadlockproblematik bei der Konfiguration eines 2-dimensionalen Arrays (siehe Patentbeschreibung)
Figur 19: Verdeutlichung des FILMO-Konzeptes
Figur 20: Grundprinzip der Inter-CT-Kommunikation
Figur 21: Implemetierungsbeispiel der Inter-CT-Kommunikation nach dem GETCTS-Verfahren
Figur 22: Implemetierungsbeispiel der Inter-CT-Kommunikation nach dem GETBUS-Verfahren
Figur 23: Busstruktur des Inter-CT-Bus
Figur 24: Adressierung innerhalb von CT-Hierarchien
Figur 25: GARBAGE-Liste
Figur 26: FILMO-Liste
Figur 27: FILMO Funktion innerhalb einer KR
Figur 28: Speichern der Zustände vor Ausführen einer KR oder des FILMOs.

### Beschreibung der Figuren

**Figur 1** zeigt den Ablauf der CTR-Adressgenerierung innerhalb einer CT. Dabei wird ein eingehender binärer Triggervektor (0101) in der LUT1 auf eine gültige KR oder IKR ID übersetzt. Existiert keine gültige ID, wird ein Signal "Illegal Trigger" generiert (0102), das anzeigt, daß der Trigger nicht in LUT1 bekannt ist. Das Signal kann als Fehlermeldung an die übergeordnete CT weitergeleitet oder ignoriert werden. Die Übersetzung von "Trigger" nach "ID" wird mittels des Befehls "REFERENCE" in die LUT1 eingetragen.
Eine gültige ID (0103) wird an die LUT2 weitergeleitet. IDs die innerhalb von Befehlen, also durch einen Operanden, angegeben sind (0104), treffen direkt auf die LUT2. Die LUT2 übersetzt eine eingehende ID in die Adresse der KR/IKR innerhalb des CTR. Ist die KR/IKR nicht im CTR gespeichert (es liegt im Cache nicht vor), wird das Signal "Miss" generiert (0105). Ist die übersetzte Adresse der KR/IKR mit dem Token "NoAdr" markiert, wird mit "NoEntry" (0107) angezeigt, daß die Adresse gelöscht ist. "Miss" und "NoEntry" zeigen an, daß eine Übersetzung auf eine CTR-interne Adresse nicht möglich ist. Auf Grundlage dieses Signals lädt die LOAD-Statemachine die KR/IKR mit der entsprechenden ID von einer darüberliegenden CT nach.
Sofern eine gültige Adresse vorhanden ist, wird diese an die Pointerarithmetik des Adressgenerators weitergeleitet (0106). In LUT1 wird ein eingehender binärer Triggervektor entweder in eine ID oder einen weiteren Triggervektor übersetzt, wobei in diesem Fall der Triggervektor ausgegeben wird (0108).

In **Figur 2** ist der Ablauf beim Laden einer KR/IKR dargestellt. Zunächst wird die ID (0201) der zu ladenden KR/IKR an die darüberliegende CT gesendet. Daraufhin wird in die LUT2 an der Stelle des Eintrages für die angeforderte ID der Wert des FreePointers (FP) eingetragen. FP zeigt auf den Eintrag hinter dem letzten für eine KR/IKR genutzen Eintrag im CTR. Dies ist der erste Eintrag, auf den die zu ladende KR/IKR gespeichert wird.
Die Statemachine wartet auf ein Datenwort von der drüberliegenden CT. Sobald das Wort verfügbar ist, wird es an die durch FP referenzierte Stelle geschrieben. FP wird inkrementiert. Zeigt FP auf einen Eintrag hinter dem Ende des CTR wird der erste Eintrag im CTR entfernt um Platz zu schaffen (0202); dabei wird FP aktualisiert. Ist das von der darüberliegenen CT gesendete Datenwort "STOP", wird der Ladevorgang abgebrochen (0203), ansonsten mit dem Warten auf ein neues Datenwort fortgesetzt (0204).

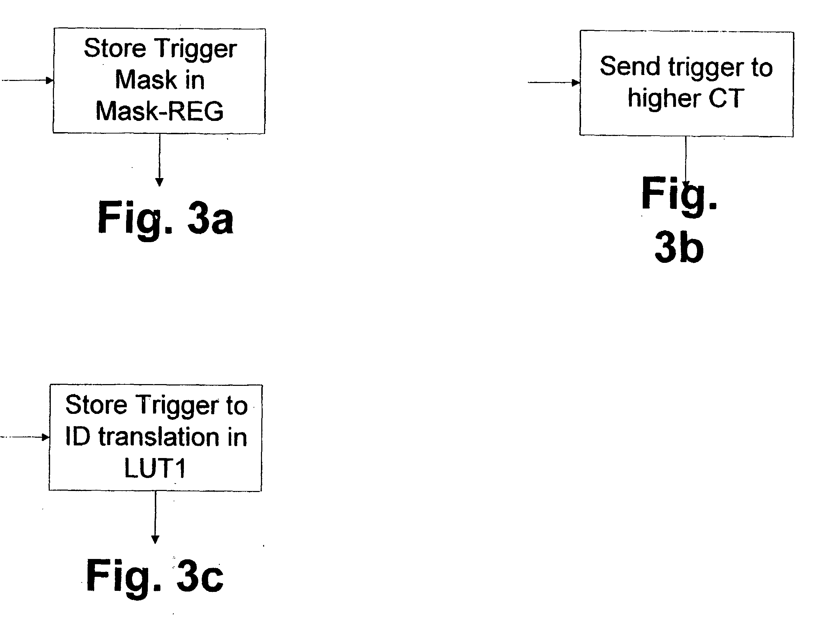

In **Figur 3a** ist der "MASK"-Befehl dargestellt. Der Operand des Befehls wird in das MASK-Register geschrieben. Das MASK-Register befindet sich am Eingang der Triggersignale vor LUT1 und maskiert ungültige Trigger aus.
In **Figur 3b** wird durch den Befehl "TRIGGER" der Operand des Befehls als Triggervektor zu den anderen CTs abgesendet.
In **Figur 3c** wird durch den Befehl "REFERENCE" die Übersetzung eines Triggers zu der entsprechenden KR/IKR ID in die LUT1 geschrieben.

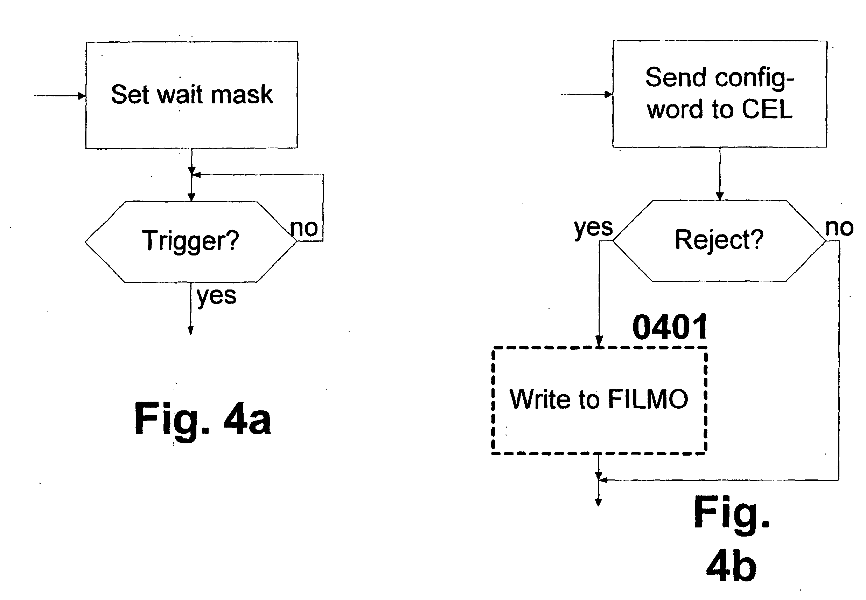

In **Figur 4a** wir der Befehl "WAIT" dargestellt. Der Operand des Befehls wird in das WAITMASK-Register geschrieben. Alle Trigger, bis auf den/die Erwarteten und daher in WAITMASK freigeschalteten werden ignoriert. Erst nach Auftreten des Triggers wird zum Programmfluß zurückgekehrt.
In **Figur 4b** ist der "PUSH"-Befehl abgebildet. Das Konfigurationswort wird zum adressierten konfigurierbaren Element (CEL) gesendet. Akzeptiert das CEL das Konfigurationswort nicht; da das CEL sich beispielsweise im Zustand "nicht konfigurierbar" befindet; wird das Konfigurationswort in den FILMO geschrieben (0401).

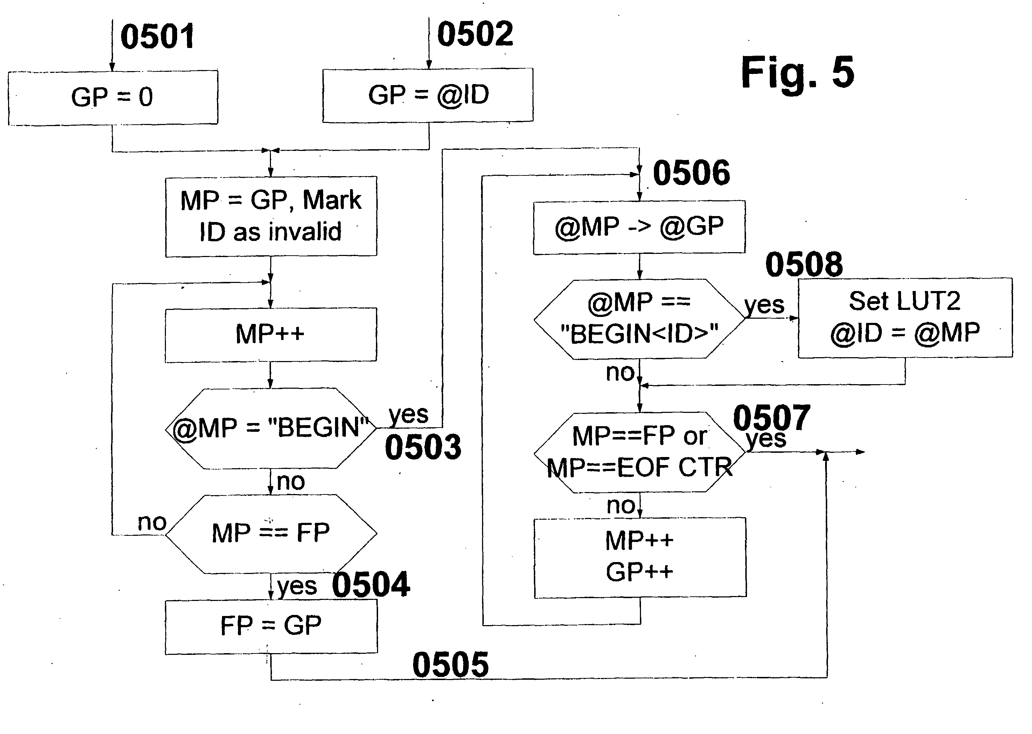

**Figur 5** zeigt den Ablauf eines "REMOVE"-Befehles. Es gibt zwei Aufrufvarianten:
1. Die erste im CTR liegende KR/IKR wird aus dem CTR entfernt. Dem GarbagePointer (GP) wird die Adresse 0 des CTR zugewiesen (0501).
2. Eine spezifisch durch ihre ID angegebene KR/IKR wird aus dem CTR entfernt. Dem GarbagePointer (GP) wird die erste Adresse des zu entfernenden KR/IKR im CTR zugewiesen (0502).
Der MovePointer wird mit dem Wert von GP geladen. GP und MP referenzieren auf einen "BEGIN <ID>"-Befehl im CTR, auch wenn die erste KR/IKR aus dem CTR entfernt werden soll. Die betreffende ID wird in LUT2 als ungültig markiert. MP wird so lange inkrementiert, bis das "BEGIN <ID>" des nächsten im Speicher liegenden KR/IKR erreicht wird (0503), ODER MP gleich dem FreePointer (FP) ist, das bedeutet, daß die zu entfernende KR/IKR die letzte im CTR ist (0504).
- In diesem Fall wird FP mit dem Wert von GP geladen, wodurch die durch die zu löschende KR/IKR belegten Speicherstellen als frei markiert werden; und die Funktion "REMOVE" ist beendet (0505).
- Andernfalls ("BEGIN <ID>" wird erreicht (0506)) werden die durch MP referenzierten Daten an die durch GP referenzierte Speicherstelle kopiert. MP und GP werden inkremetiert. Dieser Ablauf findet so lange statt, bis MP das Ende von CTR oder die Position von FP erreicht hat (0507). Wird während des Ablaufes durch MP eine Speicherstelle referenziert, in der "BEGIN <ID>" steht, wird der Eintrag für die entsprechende ID in LUT2 mit MP überschrieben (0508), damit bei einem Lookup die richtige Speicherstelle ausgegeben wird.

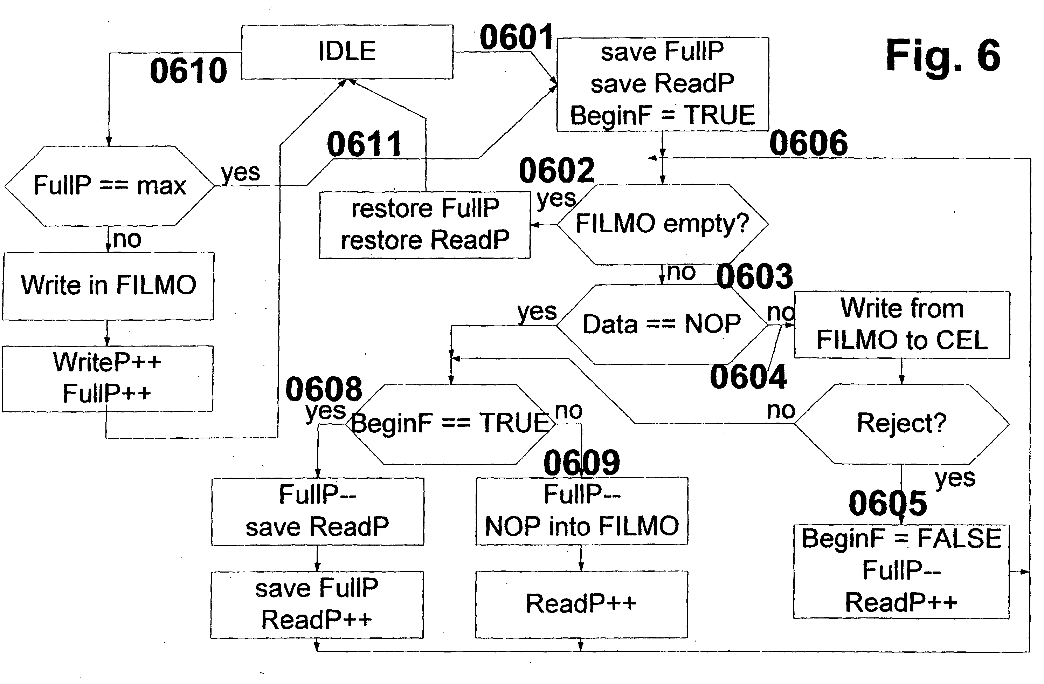

**Figur 6** zeigt das Ablaufdiagram des FILMOs. Ein FILMO beinhaltet drei Pointer:
1. WriteP: Der Schreibzeiger des FILMO-RAM
2. ReadP: Der Lesezeiger des FILMO-RAM
3. FullP: Der Zustandszeiger, der den "Füllstand" des FILMO-RAMs repräsentiert und einen Unterlauf, bzw. Überlauf verhindert.
Ein ein-Bit Register "BeginF" zeigt an, ob sich der aktuelle Lesezugriff am Anfang des FILMO-RAMs befindet (TRUE), d.h. keine nicht gelöschten Einträge befinden sich zwischen dem Lesezeiger und dem Beginn des FILMO-RAMs; oder sich der Lesezeiger in der Mitte des FILMO-RAMS befindet (FALSE), also benutzte Einträge zwischen dem Lesezeiger und dem Beginn des FILMO-RAMS liegen. Weiterhin existieren zwei Register zum Speichern der Zustände des ReadP und FullP. Es ist notwendig beim Auftreten des ersten ungelöschten Eintrages die beiden Register zu sichern, da bei einem später stattfindenden Lesezugriff an der Stelle dieses Eintrages mit dem Auslesen begonnen werden muß. Andererseits müssen jedoch ReadP und FullP während des aktuellen Lesevorganges weiterhin modifiziert werden, um die nächsten Leseadressen zu erhalten, bzw. das Ende des FILMO-RAMs festzustellen. Durch den Aufbau des FILMOs als FIFO-ähnliche Struktur --- als sogenannten Ringspeicher --- kann Beginn und Ende des Speichers nicht anhand einer Adresse 0 oder eine Maximaladresse festgelegt werden. Aus dem Grundzustand führen zwei Ablaufpfade:
1. Lesepfad (0601)
   FullP und ReadP werden in die Register gesichert. Die Abarbeitungsschleife beginnt:
   BeginF ist TRUE.
   Ist FullP gleich 0, werden ReadP und FullP aus ihren Registern zurückgelesen (0602) und die Statemachine springt in den Grundzustand zurück.
   Ansonsten (0603) wird getestet, ob der Eintrag im FILMO, auf den ReadP zeigt gleich "NOP" ist, d.h. es handelt sich um einen als gelöscht markierten Eintrag in der Mitte des FILMOs. Ist dies nicht der Fall (0604) wird versucht den Eintrag in das konfigurierbare Element (CEL) zu schreiben. Gelingt dies nicht (REJECT, 0605), da CEL nicht umkonfigurierbar ist, wird BeginF auf FALSE gesetzt, FullP dekrementiert und ReadP inkrementiert. Die Statemachine springt an den Beginn der Abarbeitungsschleife (0606).
   Gelingt das Schreiben des Eintrages an das CEL (0607), oder der Eintrag ist ein NOP, wird BeginF gestestet:
   BeginF == TRUE (0608): Es liegen keine ungelöschten Einträge vor diesem. FullP wird inkrementiert, ReadP wird in dem zugeordneten Register gesichert, um den neuen Anfang des FILMOs festzuhalten. FullP wird gesichert um die aktuelle Datenmenge festzuhalten; ReadP wird inkrementiert.
   BeginF == FALSE (0609): FullP wird inkrementiert und der aktuelle Eintrag im FILMO-RAM mit NOP überschrieben, d.h. der Eintrag wird gelöscht. ReadP wird inkrementiert.
   In beiden Fällen springt die Statemachine an den Beginn der Abarbeitungsschleife.
2. Schreibpfad (0610)
   Es wird getestet, ob der FILMO-RAM voll ist, indem FullP auf den maximalen Wert überprüft wird. Ist dies der Fall (0611), wird in den Lesepfad gesprungen um Platz zu schaffen.
   Ansonsten wird das Datenwort in den FILMO-RAM geschrieben und WriteP und FullP inkrementiert.

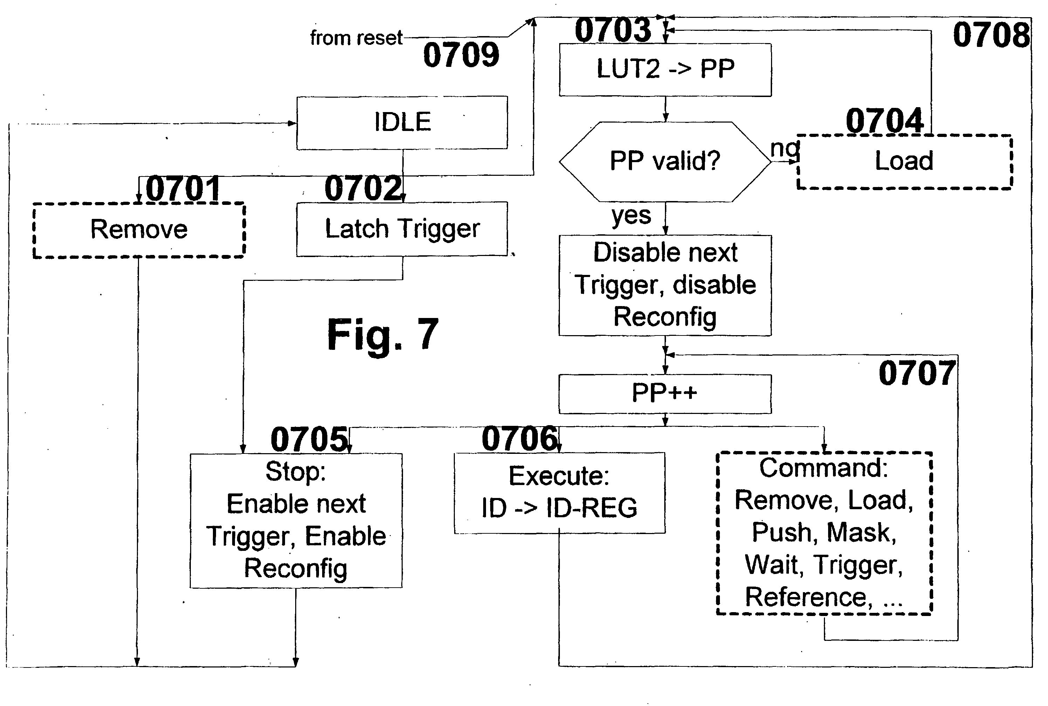

**Figur 7** zeigt den Ablauf in der Hauptstatemachine. Der Grundzustand (IDLE) wird verlassen, sobald ein
1. REMOVE-Kommando von der darüberliegenden CT auftritt (0701): Der REMOVE-Befehl wird ausgeführt und die Statemachine kehrt nach IDLE zurück.
2. Ein Triggersignal zur Generierung eines Triggers zwischen den CTs auftritt (0702):
   Der Trigger wird ausgegeben.
   Die Statemachine springt in den "STOP"-Befehl und danach nach IDLE zurück.
3. Ein Triggersignal zur Ausführung eines KR/IKR <ID> auftritt (0703):
   Der ProgramPointer (PP) wird mit der durch LUT2 generierten Adresse geladen. Ist die Adresse ungültig, d.h. kein Eintrag für das zu ladende KR/IKR vorhanden, wird dieses geladen (0704) und PP neu gesetzt.
   Die Ausführungsschleife beginnt:
   PP wird inkrementiert (beim ersten Schleifendurchlauf wird dadurch der BEGIN <ID>-Befehl übersprungen), das Auftreten weiterer Trigger wird unterbunden, RECONFIG wird gesperrt. Die Befehle werden ausgeführt und zum Beginn der Ausführungsschleife gesprungen (0707).
   Der Befehl "STOP" wird gesondert ausgeführt (0705). Die Trigger und RECONFIG werden wieder freigeschaltet und die Statemachine springt nach IDLE.
   Der Befehl "EXECUTE" wird ebenfalls gesondert ausgeführt (0706). Die in EXECUTE <ID> angegebene ID wird in das ID-REG geschrieben. PP wird neu geladen und die durch ID angegebene KR/IKR ausgeführt (0708).

Nach einem Reset der CT wird die Grundkonfiguration in das CTR geladen und direkt in die Ausführung der Grundkonfiguration gesprungen (0709).

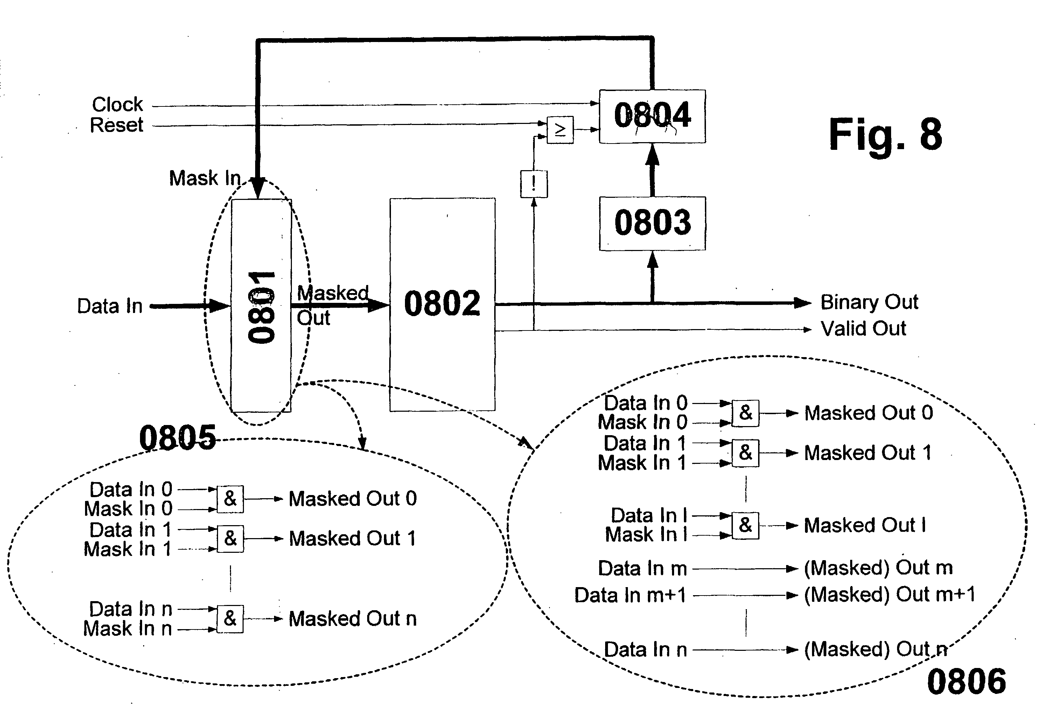

**Figur 8** zeigt den Aufbau eines SCRR-ARB. Die zu arbitrierenden Signale gelangen über DataIn auf eine Maske (0801), die gemäß der bekannten Tabelle einen zusammenhängenden Teil der Signale durchschaltet, bzw. sperrt. Ein gewöhnlicher Prioritätsarbiter (0802) nach dem Stand der Technik arbitriert ein Signal aus der Menge der Durchgeschalteten und lieferte dessen Binärvektor (BinaryOut) zusammen mit einer gültig/ungültig-Kennung (ValidOut) (ebenfalls gemäß dem Stand der Technik) als Ausgang des SCRR-ARB.
Dieses Signal wird gemäß der bekannten Tabelle dekodiert (0803) und auf ein Register zur Taktsynchronisierung (0804) geführt. Über dieses Register wird die DataIn Maske geschaltet. Dabei wird das Register entweder durch einen Takt oder ein Next-Signal (Enable EN), das den nächsten gültigen Binärvektor abfragt gesteuert. Bei einem Reset oder wenn die Kennung (ValidOut) ungültig anzeigt wird das Register so geschaltet, daß die DataIn Maske alle Signale durchschaltet.
Der Aufbau der Maske ist in 0805 dargestellt. In 0806 ist die Maske ein weiteres Mal abgebildet, dabei sind die Signale DataIn 0..DataIn 1 gemäß des SCRR-Prinzips gleichpriorisiert, während DataIn m .. DataIn n höherpriorisiert sind.

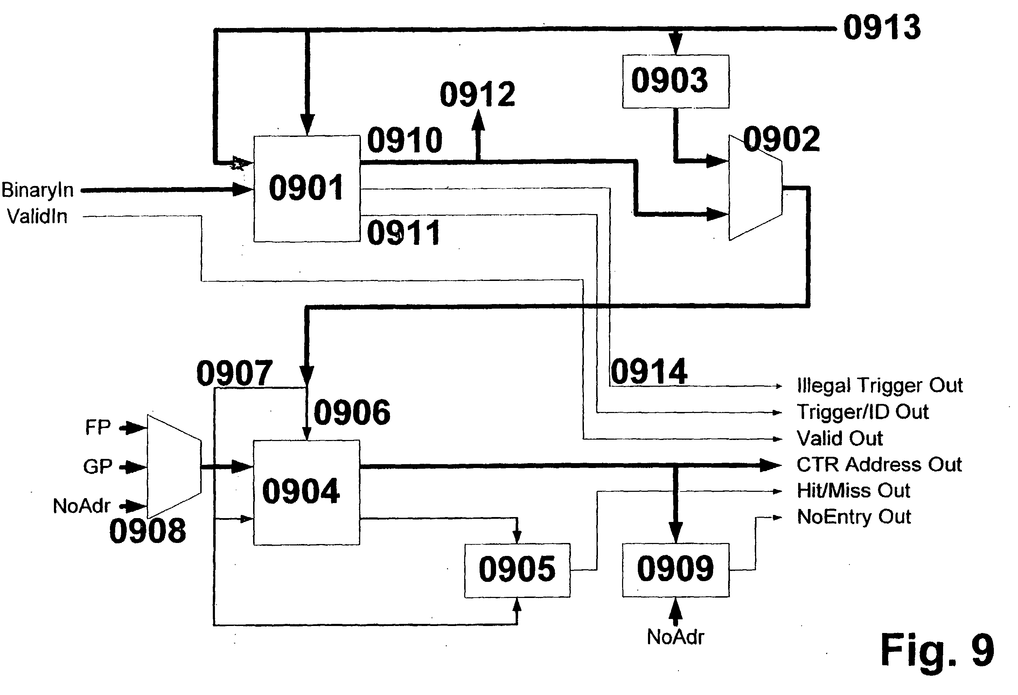

In **Figur 9** ist die LUT-Struktur abgebildet. Der Binärvektor (BinaryIn) des arbitrierten Triggers wird auf den Adresseingang der LUT1 (0901) geführt. LUT1 übersetzt den Binärvektor entweder in einen gültigen Trigger um diesen an eine andere CT weiterzuleiten oder eine gültige ID. Beide werden über 0910 ausgegeben. 0911 zeigt an, ob es sich um einen Trigger oder eine ID handelt.
Ist über den Befehl "REFERENCE" keine Übersetzung des eingehenden Binärvektors in LUT1 eingetragen, wird --- mittels eines Biteintrages oder eines Vergleichers auf ein bestimmtes Token (z.B. "VOID") --- das Signal "Illegal Trigger" 0914 generiert.
Ein Trigger wird über 0912 an externe CTs geführt, IDs werden über den Multiplexer (0902) weiterverarbeitet. 0902 schaltet entweder der Datenausgang von LUT1, der eine gültige ID angibt, oder das ID-Register (0903) der CT auf den Adresseingang der LUT2 (0904). 0904 besitzt eine Cache-ähnliche Struktur, d.h. der niederwertige Teil (0906) des Datenausgangs von 0902 wird auf den Adresseingang von 0904 geschaltet, während der höherwertige Teil (0907) auf den Dateneingang von 0904 geschaltet wird. Der 0907 gehörende Datenausgang wird über einen Komparator (0905) mit 0907 verglichen. Der Vorteil dieses Verfahrens ist, daß 0904 nicht die Tiefe zur Übersetzung aller IDs aufweisen muß, sondern erheblich kleiner ausfallen kann. Ähnlich eines gewöhnlichen Caches wird lediglich ein Teil der IDs übersetzt, wobei in der LUT2 anhand 0907 festgestellt werden kann, ob die selektierte ID der von LUT1 angegebenen entspricht. Dies entspricht einem Cache/TAG-Verfahren nach dem Stand der Technik.

Einem zweiten Dateneingang von 0904 ist ein Multiplexer 0908 zugeordnet, der je nach Operation den FreePointer (FP, Operation LOAD), den GarbagePointer (GP, Operation REMOVE) oder eine Invalid-Kennung/Token (NoAdr, Operation REMOVE) zur Speicherung an LUT2 liefert. Die beiden Pointer referenzieren auf Speicherstellen im CTR, "NoAdr" gibt an, daß kein Eintrag zu der passenden ID existiert, der Eintrag gelöscht wurde. Dies wird am Datenausgang festgestellt, indem über den Vergleicher 0909 die Daten auf das Token "NoAdr" verglichen werden. An die Statemachine wird weitergeleitet:
- Das Auftreten eines Binärvektors wird über "ValidIn" (vgl. Figur 8).
- Die Angabe ob es sich bei der Übersetzung in LUT1 um einen Trigger oder eine ID handelt (0911, "Trigger/ID Out"). Trigger werden über 0912 an andere CTs weitergeleitet, IDs werden in der eigenen CT abgearbeitet und an die LUT2 weitergeleitet.
- Das Ergebnis von 0905, das angibt, ob die entsprechende ID in 0904 gespeichert ist ("Hit/Miss Out").
- Das Ergebnis von 0909, das angibt, ob die entsprechende ID auf eine gültige Adresse im CTR zeigt ("NoEntry Out").
Die von 0904 generierte Adresse wird an das CTR weitergeleitet ("CTR Address Out").

Die LUT1 wird über den Befehl "REFERENCE" mit der Übersetzung des eingehenden Binärvektors auf einen Trigger oder ID geladen. Die Operanden des Befehls werden über den Bus 0913 an die LUT1 geführt. Über denselben Bus wird das ID-Register (0909) geladen.

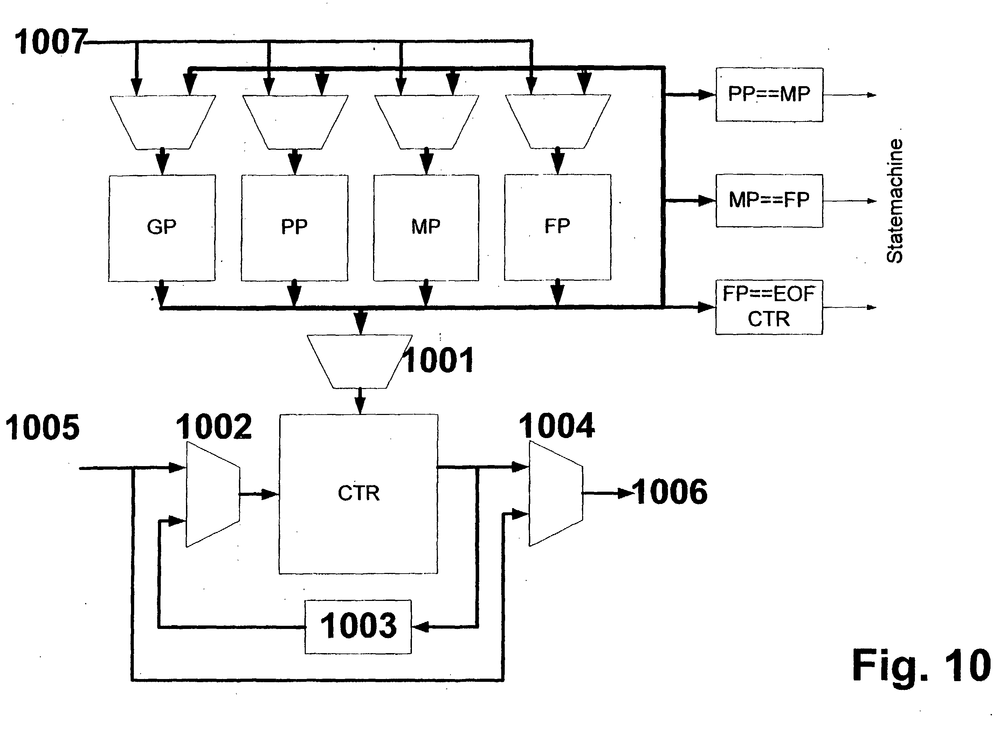

**Figur 10** zeigt die Pointerarithmetik des GarbagePointer (PG), ProgramPointer (PP), MovePointer (MP) und FreePointer (FP). Jeder Pointer besteht aus einem getrennt ansteuerbaren ladbaren up/down-Zähler. Jeder Zähler kann --- sofern notwendig --- mit dem Wert jedes anderen Zählers geladen werden; ebenso wie mit der Ausgabe von LUT2 (1007).
Über Vergleicher wird festgestellt ob
1. PP gleich MP
2. MP gleich FP
3. FP gleich der maximalen Position im CTR ist. Die Ergebnisse werden zur Steuerung der Statemachines verwendet.
Über einen Multiplexer (1001) wird einer der Pointer zum Adresseingang des CTR geleitet. Die Daten gelangen über einen Multiplexer (1002) entweder von der übergeordneten CT (1005) oder aus einem Register (1003) an das CTR. Zur Statemachine und zum FILMO (1006) werden über einen Multiplexer (1004) entweder die Daten von der übergeordneten CT oder des CTR weitergeleitet. Dabei wird beim Auftreten eines REMOVE-Befehls von der übergeordneten CT der direkt über 1004 an die Statemachine geleitet, während ansonsten die Befehle aus dem CTR an die Statemachine geführt werden. Das Register 1003 dient zur Speicherung und Rückkopplung von Befehlen auf den CTR Eingang, die während eines Durchlaufs des Garbage-Kollektors von einer Adresse an eine andere geschoben werden.

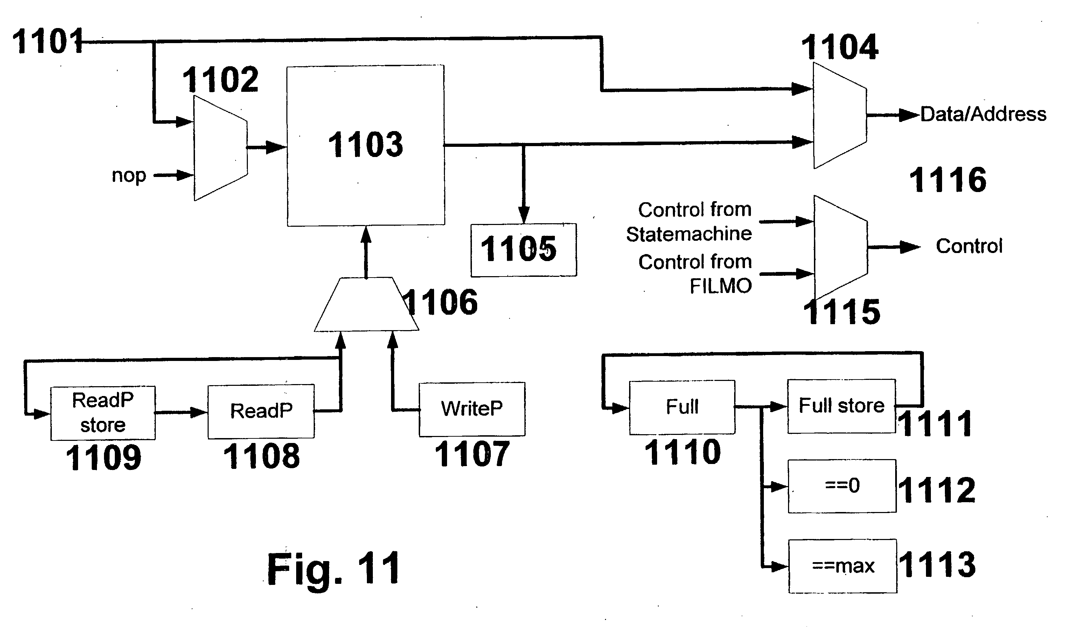

Der Aufbau eines FILMOs ist in **Figur 11** dargestellt. Die Daten gelangen von dem CTR (1101) in das FILMO und werden entwerder über den Multiplexer (1102) in das FILMO-RAM (1103) geschrieben oder über den Multiplexer (1104) an die konfigruierbaren Elemente (1116) gesendet. Werden Daten in 1103 gelöscht, wird über 1102 eine "NOP"-Token nach 1103 geschrieben. Über den Vergleicher (1105) am Datenausgang wird das "NOP"-Token erkannt und ein Schreiben zu den konfigurierbaren Elementen verhindert. Über den Multiplexer 1106 wird entweder der Schreibzeiger WriteP (1107) oder der Lesezeiger (1108) an den Adresseingang von 1103 geführt. In dem Register 1109 wird der Lesezeiger gesichert um ein Rücksetzen (siehe Figur 6) zu ermöglichen.
Der Füllstandszähler Full (1110) von 1103 wird gemäß Figur 6 in dem Register 1111 zum Rücksetzen gespeichert. Zwei Vergleicher testen, ob 1103 leer (1112) oder voll (1113) ist. Über den Multiplexer 1115 wird selektiert, ob die Steuersignale der Statemachine (von 1101) oder des FILMOs an 1116 gesendet wird.

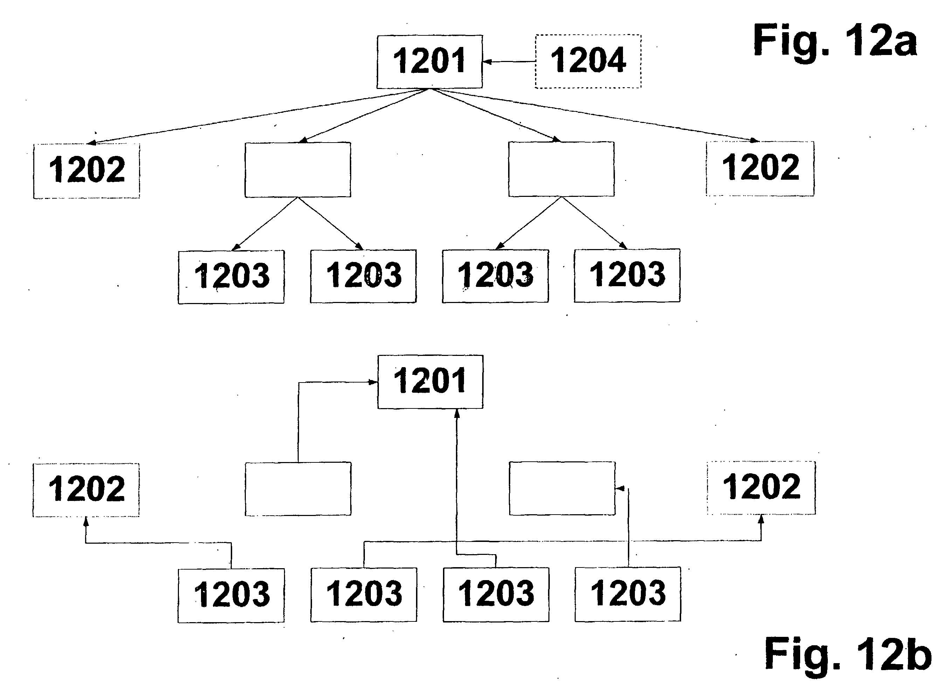

**Figur 12a** zeigt den hierarchischen Aufbau der CTs. Alle CTs beziehen ihre Daten aus der ROOT-CT (1201) und dem ihr zugeordneten ECR (1204). Für jede Implementierungsebene in einem Baustein existiert eine oder mehrere CTs. Jede CT ist für die Verwaltung ihrer Ebene und der darunterliegenden CTs zuständig. Es ist nicht notwendig, daß alle Äste das Baumes gleich tief sind. Beispielsweise können weniger Ebenen zur Steuerung der Peripherie (1202) eines Bausteines existieren als zur Steuerung der Arbeitseinheiten (1203). Der Datentransfer erfolgt baumartig. Jede CT arbeitet als Cache für alle unter ihr liegenden CTs.
Figur 12b zeigt den Triggerfluß zwischen den CTs. Während der Datenfluß baumartig verläuft, ist der Triggerfluß nicht festgelegt. Jede CT kann an jede andere einen Trigger senden. Für gewöhnlich findet ein Triggeraustausch nur von den Blättern (1203) in Richtung der ROOT-CT (1201) statt. Unter Umständen kann der Transfer jedoch auch in die entgegengesetzte Richtung verlaufen.

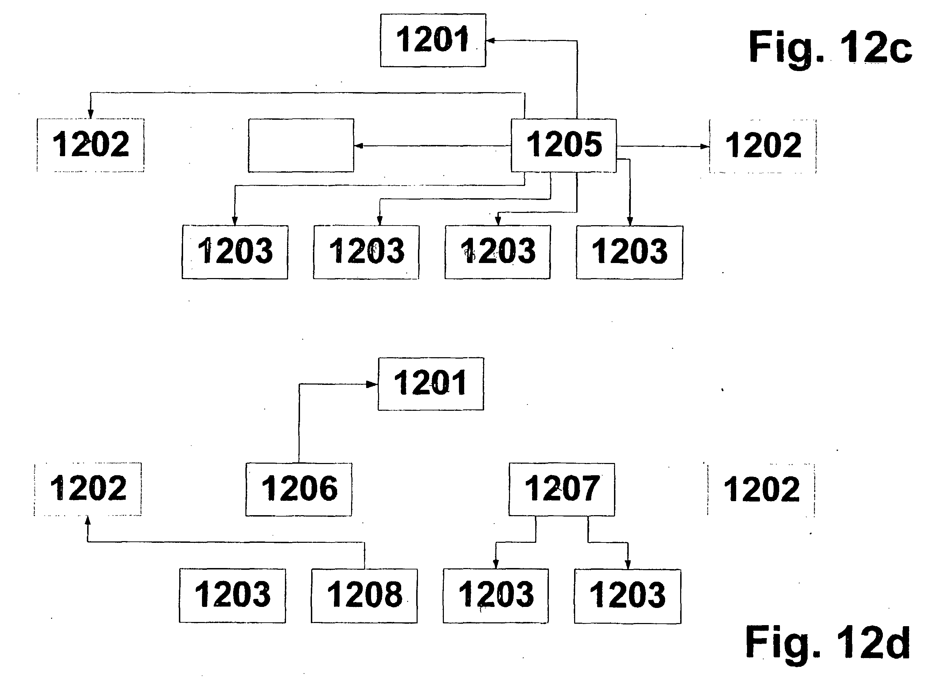

In **Figur 12c** ist ein Triggervektor Broadcast dargestellt, wobei 1205 einen Triggervektor an alle CTs sendet.

Figur 12d zeigt einen HIGHER-Triggervektor, den 1206 an die über ihr liegende CT sendet. 1207 sendet einen LOWER-Triggervektor an alle unter ihr liegenden CTs. 1208 überträgt einen direkt adressierten (ADDRESSED)-Triggervektor an eine bestimmte CT, die nicht direkt mit 1207 verbunden ist.

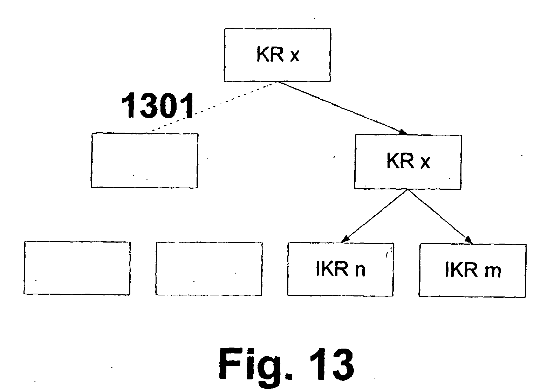

In **Figur 13** fordern zwei unabhängige IKR n und m eine gemeinsame, in der darüberliegenden CT gecachte KRx an. Es ist angedeutet, daß diese KR von dem gesamten Ast gecachet wird und auch in einem Nachbarast (1301) über eine gemeinsame CT verfügbar ist.

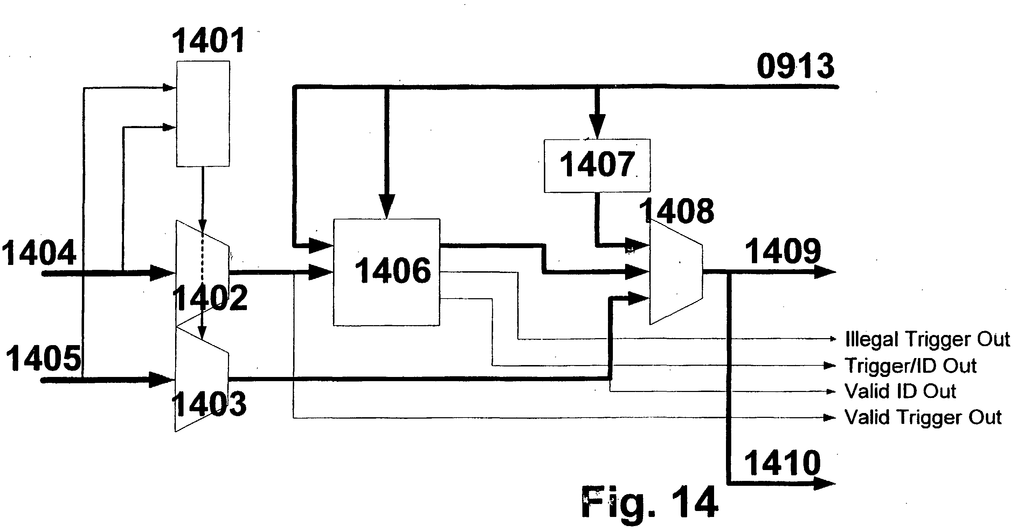

**Figur 14** zeigt ein gegenüber Figur 9 modifiziertes LUT-System, das in ROOT-CTs und CTs mittlerer Hierarchieebenen verwendet wird. Der grundlegende Unterschied zu den bislang beschriebenen CTs ist, daß anstatt einzelner Triggersignale ID- und/oder Trigger-Vektoren von der CT verwaltet werden müssen. Jedem Vektor ist dabei ein Handshake-Signal (RDY) zur Anzeige der Gültigkeit des Vektors zugeordnet, die an einen Arbiter (1401) geleitet werden. Über die Multiplexer (1402, 1403) wird entweder einer der Triggervektoren (1404) oder einer der ID-Vektoren (1405) ausgewählt. Triggervektoren gelangen direkt auf den Adresseingang der LUT1 (1406), die ansonsten gemäß Figur 9 beschaltet ist. Das ID-Register (1407) ist ebenfalls gemäß Figur 9 beschaltet. Im Gegensatz zu Figur 9 besitzt der Multiplexer 1408 drei Eingänge (vgl. 0902). Der Multiplexer wird dabei außer von der Statemachine zusätzlich von dem Arbiter 1401 angesteuert. Über den zusätzlichen Eingang werden ID-Vektoren über 1403 direkt an die LUT2 weitergeleitet. Dazu dient der Bus 1409. (Prinzipiell können auch bei CTs gemäß Figur 9 IDs gemäß einem Multiplexer (1408) direkt auf die LUT2 geschaltet werden. Die IDs können dann ohne Übersetzung direkt von den CEL an die LUT2 gesendet werden.) "Trigger/ID Out" wird gemäß Figur 9 generiert. Ein "ValidIn" Signal, das gemäß Figur 9 auf ein "Valid Out" weitergeleitet wird existiert nicht. Statt dessen wird je nach Arbitrierung durch 1401 ein "Valid Trigger Out" für Triggervektoren und ein "Valid ID Out" für ID-Vektoren generiert, um die Statemachine anzuweisen, wie die Verarbeitung stattzufinden hat.
Der Bus 1409 wird über 1410 an eine weitere Einheit geleitet, die nur in der ROOT-CT existiert und in Figur 15 beschrieben ist.
Eine ROOT-CT benötigt zusätzlich zu den normalen CT-Funktionen ein Interface zu dem externen Konfigurationsspeicher (ECR), sowie den erforderlichen Adressgenerator und Einheiten zum Verwalten der Zugriffe auf den ECR.

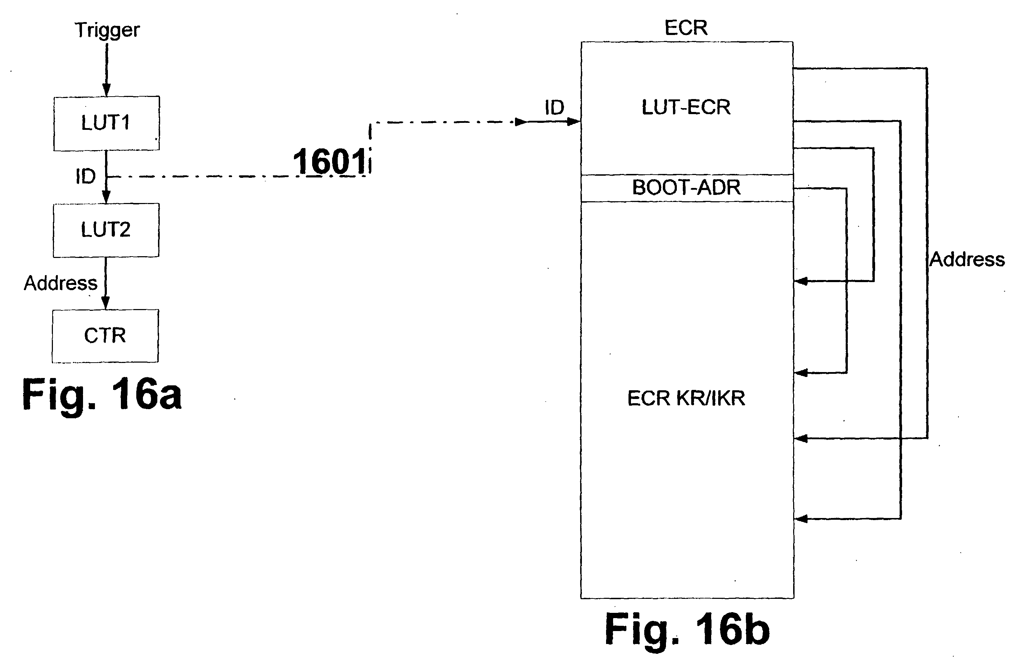

Eine gewöhnliche CT übersetzt in LUT1 eingehende Triggervektoren auf einen ID und in LUT2 das ID auf eine Speicherstelle im CTR (siehe **Figur 16a**). Eine ROOT-CT übersetzt bei Zugriffen auf das ECR eine ID innerhalb des ECR auf eine Adresse im ECR, an der das durch ID referenziert KR/IKR beginnt. Dazu ist ein Speicherbereich im ECR festgelegt, dessen Größe der möglichen Anzahl an IDs entspricht (ist beispielsweise eine ID 10-bit breit, ergibt das 2¹⁰ = 1024 mögliche IDs, also werden 1024 Einträge im ECR reserviert). In den folgenden Beispielen befindet sich dieser Speicherbereich am unteren Ende des ECRs und wird LUT-ECR genannt, um die Ähnlichkeit zur LUT2 zu unterstreichen. Die Übersetzung eines Triggers auf eine ID findet dabei gemäß den bereits bekannten CTs in der LUT1 statt (1601). Zum besseren Verständnis verdeutlicht **Figur 16b** den Zugriff auf das ECR.

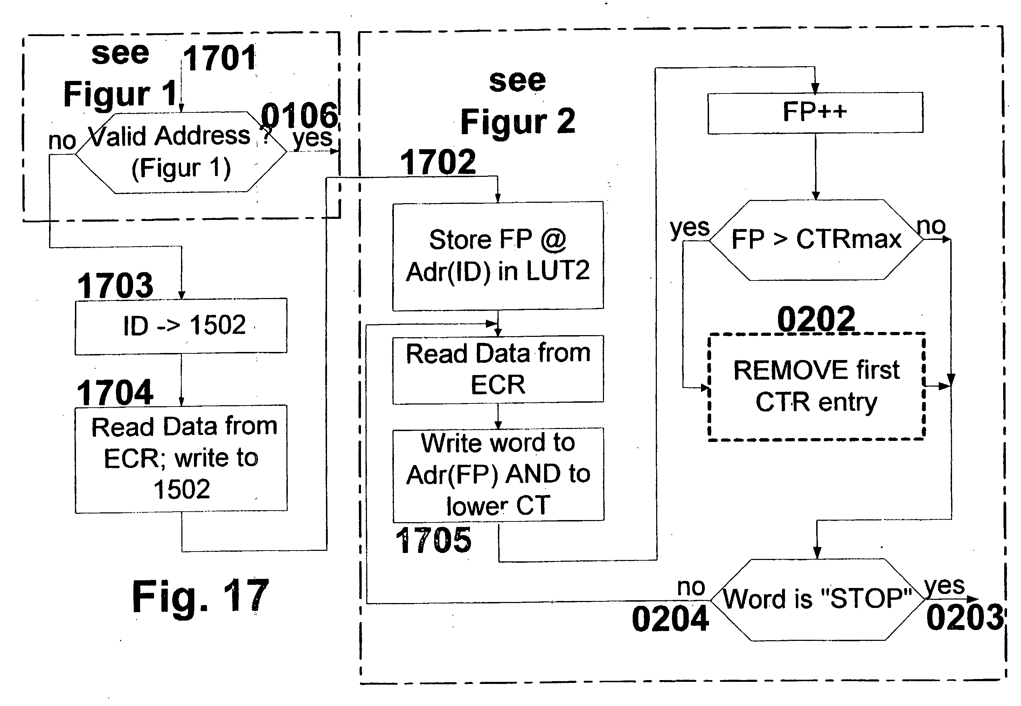

Eine ID gelangt in **Figur 15** über den Bus 1410 auf Figur 14 an den Multiplexer 1501. Über 1501 wird die ID in den ladbaren Zähler 1502 geschrieben. Der Ausgang von 1502 führt über einen Multiplexer 1503 an den Adressbus (1504) des ECR. Über den Datenbus 1505 gelangt die Übersetzung der ID auf eine Speicheradresse über einen Multiplexer/ Demultiplexer (1506) an 1501, der 1502 mit der Speicheradresse lädt. Daraufhin werden über die Statemachine LOAD-ECR (siehe Figur 17) die Datenwörter der entsprechenden KR/IKR aus dem ECR gelesen und in das CTR geschrieben, wobei 1502 nach jedem Lesevorgang erhöht wird; so lange, bis der Befehl "STOP" gelesen wurde.

Über das Interface 1507 schreibt der übergeordnete HOST über 1503/1506 die KR/IKR in das ECR. Dabei wird über die Statemachine (CTS) arbitriert, ob der HOST oder die ROOT-CT Zugriff auf das ECR hat.

Nach einem Reset des Bausteines muß eine Grundkonfiguration (BOOT-KR) geladen werden. Dazu wird eine feste Speicheradresse (BOOT-ADR) eingeführt, die auf die erste Speicherstelle der BOOT-KR zeigt. Als BOOT-ADR wird die Speicherstelle 0h empfohlen, sofern die IDs bei 1 beginnen, andernfalls kann 2^{ID} oder irgend eine andere Speicherstelle verwendet werden. In dem Ausführungsbeispiel wird 2^{ID} verwendet.

Die ROOT-CT führt zum Laden der BOOT-KR an der Stelle BOOT-ADR einen Lookup durch, sofern eine BOOT-KR geladen ist. Die ROOT-CT schreibt die Daten nach 1502 um von dort die BOOT-KR bis zum Auftreten eines "STOP" Befehls zu laden.

Eine Überwachungseinheit innerhalb der ROOT-CT übernimmt die Synchronisation des HOST mit dem Baustein. Dies geschieht folgendermaßen:
Die Adressen kleine 2^{ID} werden durch 1508 überwacht, d.h. bei Zugriffen auf diese Adressen durch den HOST wird ein Signal (ACC-ID) an die Statemachine (CTS) gesendet. Ebenfalls wird BOOT-ADR über 1509 überwacht und sendet ein Signal ACC-BOOT an die Statemachine(CTS).
Die Statemachine (CTS) reagiert wie folgt:
   - Schreibt HOST auf die BOOT-ADR, bewirkt dies das Laden der BOOT-KR.
   - Schreibt HOST das Datenwort 0 (1512) auf die BOOT-ADR, wird dies über den Komparator 1510 festgestellt und bewirkt das Anhalten des Bausteines.
   - schreibt der HOST auf eine Adresse kleiner 2^{ID} wird die Adresse in das REMOVE-Register (1511) geladen. Da die Adresse der ID entspricht (siehe ECR-LUT) steht die ID der geänderten KR/IKR in 1511. An alle CTs wird der Befehl REMOVE <ID> zur sofortigen Ausführung gesendet (1513). Die CTs löschen daraufhin die KR/IKR der entsprechenden ID aus ihrem CTR, bzw. LUT2. Bei einem nachfolgenden Aufruf der KR/IKR müssen die CTs zwangsläufig die neue KR/IKR aus dem ECR laden.

**Figur 17** zeigt den Ablauf in einer ROOT-CT bei Laden einer KR/IKR aus dem ECR. Befindet sich eine ID nicht im internen CTR (vgl. Figur 1, 1701) wird die ID in den Zähler 1502 geschrieben (1703). Ein Zugriff auf das ECR mit der Adresse in 1502 liefert die Basisadresse der KR/IKR. Diese wird in 1502 geschrieben (1704). Ein LOAD gemäß Figur 2 findet statt (1702). Dabei werden die Daten statt von einer Übergeordneten CT aus dem ECR gelesen (1705) und nicht nur in das eigene CTR geschrieben, sondern an die untergeordnete CT gesendet (1706).

In einer CT mittlerer Hierarchieebene läuft die Übersetzung der Trigger ähnlich Figur 1, mit der Ausnahme, daß Triggervektoren und ID-Vektoren gemäß Figur 14 behandelt werden. Die KR/IKR werden gemäß Figur 2 geladen, mit der Ausnahme, daß die Datenworte nicht nur in das eigene CTR geschrieben werden (0210), sondern gleichzeitig an die untergeordnete CT gesendet werden.

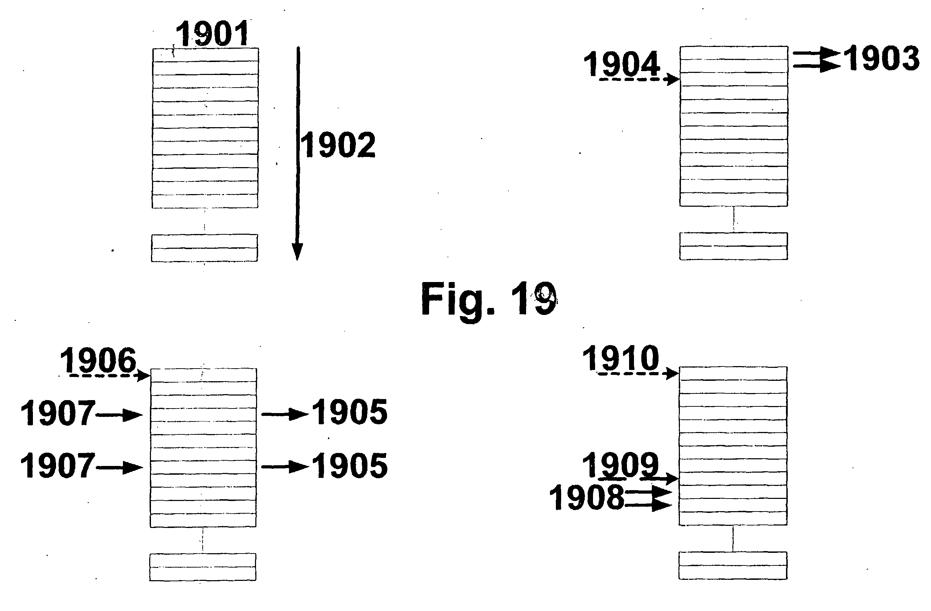

**Figur 19** verdeutlicht das FILMO Prinzip. Der FILMO (1901) wird bei lesenden und schreibenden Zugriffen immer vom Anfang zum Ende durchlaufen (1902). Werden Einträge vom Anfang des FILMOs geschrieben und gelöscht (1903), wird der Lesezeiger auf den ersten ungelöschten Eintrag verschoben (1904). Werden Einträge aus der Mitte das FILMOs geschrieben (1905), bleibt der Lesezeiger unverändert (1906), die Einträge werden mit "NOP" markiert (1907). Werden Daten in das FILMO geschrieben (1908), werden diese am Ende, hinter dem letzten Eintrag angehängt (1909). Der Lesezeiger (1910) bleibt unverändert.

Selbstverständlich kann eine CT mit nur einem Speicher, der LUT1, LUT2 und CTR umfaßt aufgebaut werden. Die Steuerung dafür ist jedoch aufwendiger. Die CTs sind dabei ähnlich der ROOT-CT aufgebaut, die bereits die LUT2 UND das CTR im ECR integriert. Für das Verständnis des Verfahrens ist eine Beschreibung dieser CTs nicht erforderlich.

Wird eine CT als Cachesystem für Daten eingesetzt, werden Trigger zum Schreiben von Daten in das CTR eingeführt. Dabei werden die Daten von einer CEL in das CTR geschrieben. Die hierzu notwendigen Änderungen sind trivial, das FILMO kann komplett entfallen. Beim Cachen der Daten tritt das Problem der Datenkonsistenz auf. Dies kann umgangen werden, indem ein Verfahren gemäß DE 42 21 278 A1 eingesetzt wird, um die Daten und deren Gültigkeit in den einzelnen Hierarchieebenen zu kennzeichnen. Werden Daten zur Durchführung eines Read-Modify-Write-Zyklusses (RMW-Zyklus) angefordert, werden die Daten auf allen Hierarchieebenen anhand eines zusätzlichen Eintrages in dem CTR/ECR als "ungültig" (INVALID) gekennzeichnet. In den Eintrag kann dazu die eindeutige ID der die Daten benutzenden KR/IKR eingetragen werden. Die Daten können so lange von keiner KR/IKR mit anderer ID benutzt werden, bis die die Daten benutzende KR/IKR die Daten zurückgeschrieben (vgl. Write-Back-Methode nach dem Stand der Technik) und ihre ID gelöscht hat.

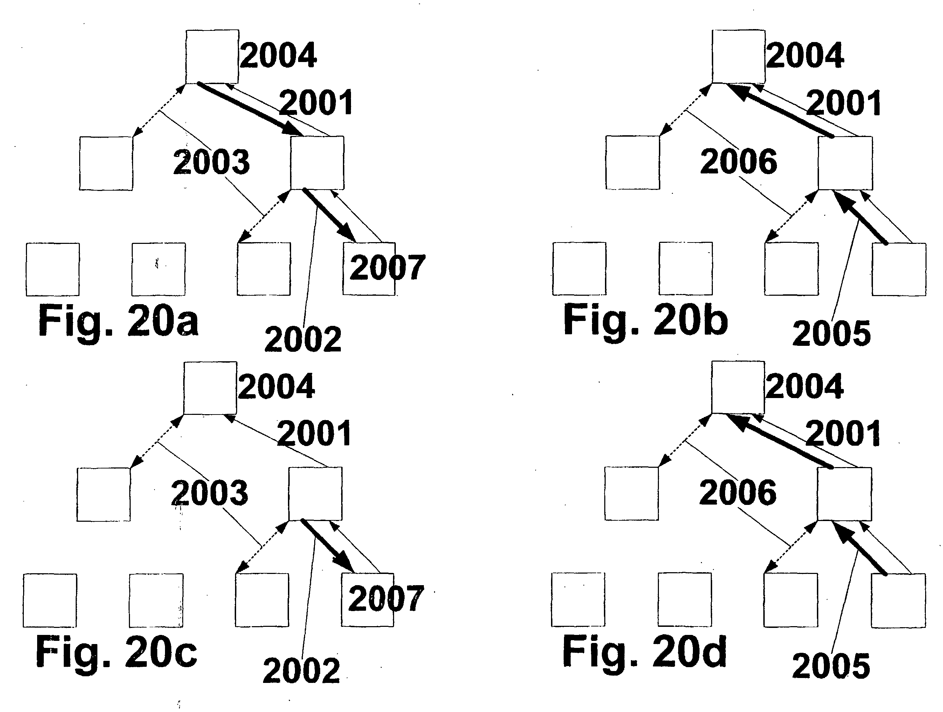

### Figur 20 zeigt ein Ausführungsbeispiel:

In **Figur 20a** fordert die CT 2007 Daten von der darüberliegenden CT an, diese fordert die Daten von der ROOT-CT 2004; mit der Datenanforderung wird die ID der Anfordernden KR/IKR (2001) übertragen. Die Daten (2002) werden an 2007 gesendet. Alle anderen, späteren Zugriffe werden abgewiesen (2003).
In **Figur 20b** werden die Daten zurückgeschrieben (2005), anderen, späteren Zugriffe werden wieder akzeptiert (2006).
In **Figur 20c** werden Daten von einer CT mittleren Hierarchie angefordert, im Besitz der Daten ist und diese an 2007 sendet. Die ID zum Sperren der Daten wird an alle CTs in der Hierarchie gesendet (2001). Beim Rückschreiben der Daten (Write-Back) in Figur 20d werden die Daten an alle CTs in der Hierarchie geschrieben und die ID gelöscht.

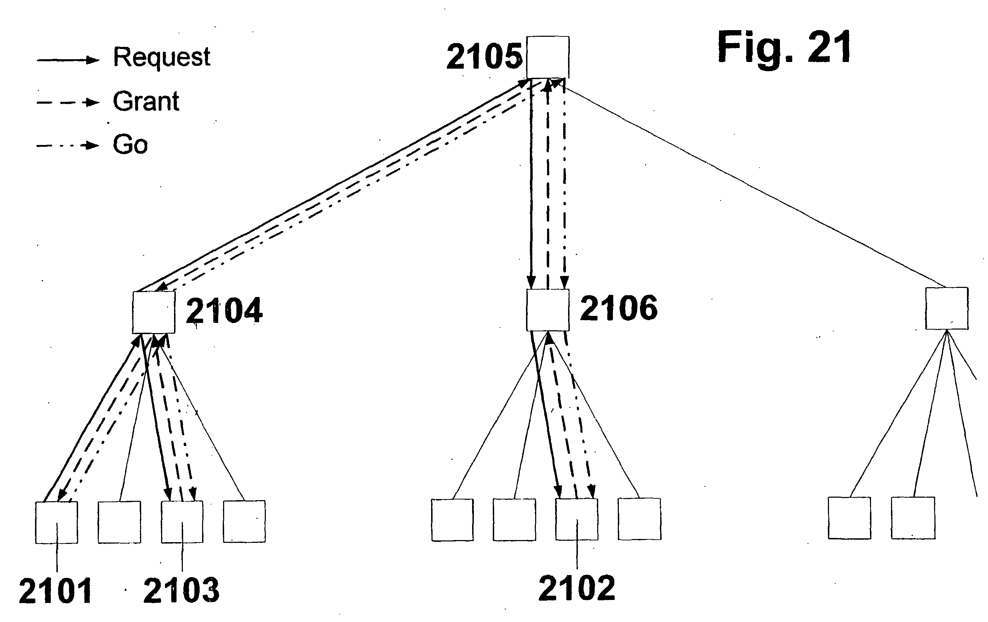

**Figur 21** zeigt die Kommunikation einer INITIATOR CT (2101) über mehrere Zwischen-CTs (2104, 2105, 2106) mit einer TARGET CT (2102), sowie die direkte Kommunikation ohne Zwischenebenen mit einer TARGET CT (2103) nach dem GETCTS/LOOSECTS-Verfahren.
2101 baut eine Verbindung zu 2103 auf. Nach erfolgreichen Aufbau erhält 2101 von 2103 einen GRANT als Bestätigung des Aufbaus. Danach baut 2101 über 2104, 2105, 2106 die Verbindung zu 2102 auf. Die Verbindung zu 2102 wird erst bestätigt (GRANT), wenn 2102 erreicht ist.
Ist die Verbindung nicht aufbaubar, da einer der Busse belegt ist, wird ein REJECT an 2101 gesendet und 2101 bricht den Vorgang ab. Das bedeutet, daß auch die Verbindung zu 2103 abgebrochen wird und ein REJECT an 2103 gesendet wird.
Bestätigt 2102 jedoch die Verbindung mit GRANT, sendet 2101 an 2103 und 2102 eine GO-Befehl, um gleichzeitig 2103 und 2102 den gelungenen Busaufbau und die Synchonisation zu bestätigen. Durch dieses Protokoll sind Daten oder Befehle synchron und deadlockfrei übertragbar, da über GO sichergestellt ist, daß alle TARGET die Befehle korrekt empfangen.

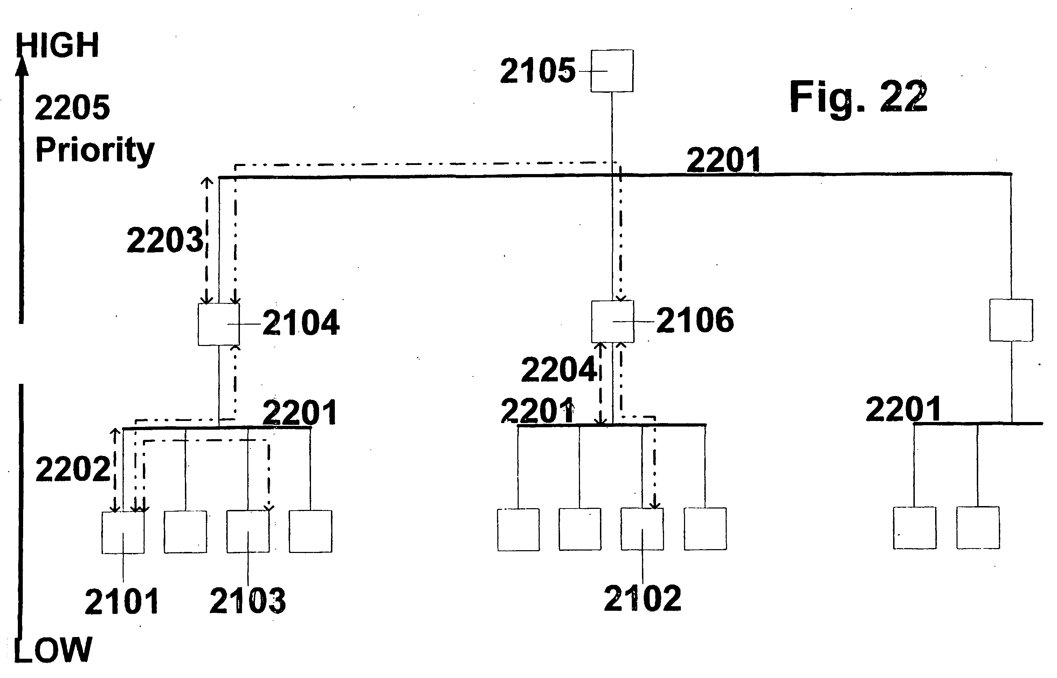

**Figur 22** zeigt den Ablauf der Inter-CT-Kommunikation nach dem GETBUS/LOOSEBUS-Verfahren. Während im Verfahren gem. Fig. 21 die jeweils übergeordneten CTs die steuernde und priorisierende Aufgabe besitzen, wird die Steuerung hier von den Inter-CT-Bussen (2201) übernommen.
Eine Verbindung zu 2103 wird aufgebaut, indem die INITIATOR-CT (2101) ihren lokalen Inter-CT-Bus anfordert (2202). Anforderungen werden bestätigt, wenn der Bus frei ist (ACCEPT) oder zurückgewiesen, wenn der Bus belegt ist (REJECT). Danach sendet sie die Adresse von 2102 auf den Bus. Gemäß dem Adressierungsschema erkennt die Bussysteuerung, daß die Adresse außerhalb der lokalen Busadressen liegt und baut über die übergeordnete CT 2104 eine Verbindung zu deren lokalem Bus auf (2203). Da die Adresse von 2102 in dessen Adressbereich liegt, wird über 2106 die Verbindung zum lokalen Bus von 2102 aufgebaut (2204). Da 2101 nunmehr alleiniger Busmaster sämtlicher für die Datenkommunikation erforderlicher Busse ist, ist sichergestellt, daß eine reibungslose deadlockfreie Kommunikation abläuft, da die Kommunikationskanäle für alle anderen CTs gesperrt sind. Auch 2102 und 2103 können die Busse nicht benutzen, da diese in ihrer TARGET-Rolle nur Befehle empfangen können und nur auf Anforderung durch den INITIATOR (2101) selbst Daten senden können.
Sobald die Kommunikation beendet ist, werden die Busse durch ein Signal von 2101 abgebaut.
Trifft 2101 während des Busaufbaus auf einen benutzten Bus, wird ein REJECT an 2101 gesendet und 2101 baut die Bussysteme wieder ab und versucht den Aufbau zu einem späteren Zeitpunkt erneut. Forderen mehrere CTs gleichzeitig denselben Bus an, so ist die überliegende CT höher priorisiert (2205). Damit wird vermieden, daß ein weit fortgeschrittener Busaufbau, der bereits über mehrere Ebenen läuft von einem noch sehr lokalen Busaufbau abgebrochen wird.
Durch ein erweitertes Protokoll ist es möglich im Falle eines REJECTs nur die Busse abzubauen, die von dem höher priorisierten Busaufbau benötigt werden. Dies kann zu einer erheblichen Performancesteigerung führen, da nicht alle Busse zu einem späteren Zeitpunkt neu aufgebaut werden müssen.

Der Aufbau des Inter-CT-Busses für das Verfahren gem.

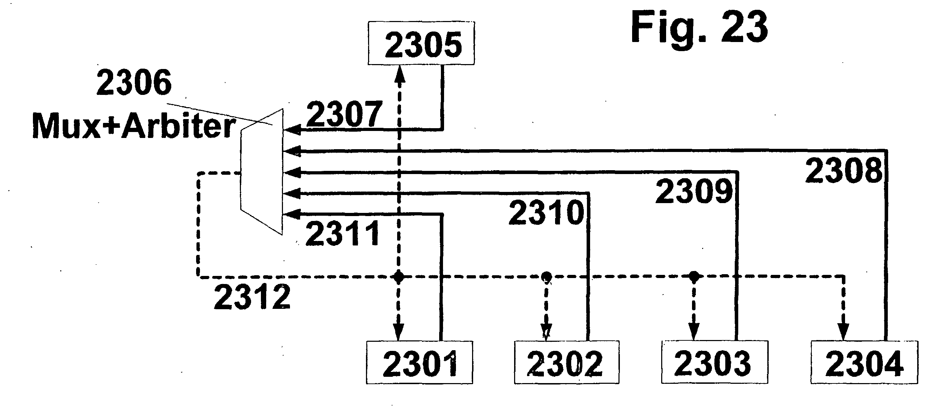

Fig. 22 ist in **Figur 23** dargestellt. Die CTs 2301-2304 sind über ihre Interface (2308-2311) zusammen mit der übergeordneten CT 2305 (Interface 2307) an den Inter-CT-Bus 2312 angeschlossen. Die Aufschaltung auf den Inter-CT-Bus geschieht über einen Round-Robin-Arbiter, der 2308-2311 gleich priorisiert und 2307 höher priorisiert, der einen Multiplexer zum Zusammenschalten der Busse ansteuert (2306). Dem Arbiter zugeordnet ist ein Statemachine, die die Steuersignale (z.B. Auf/Abbau, ACCEPT, REJECT...) auswertet.

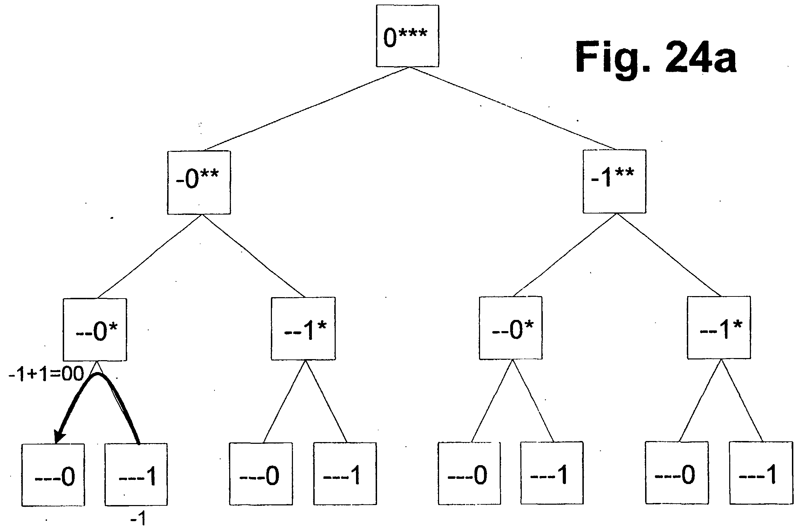

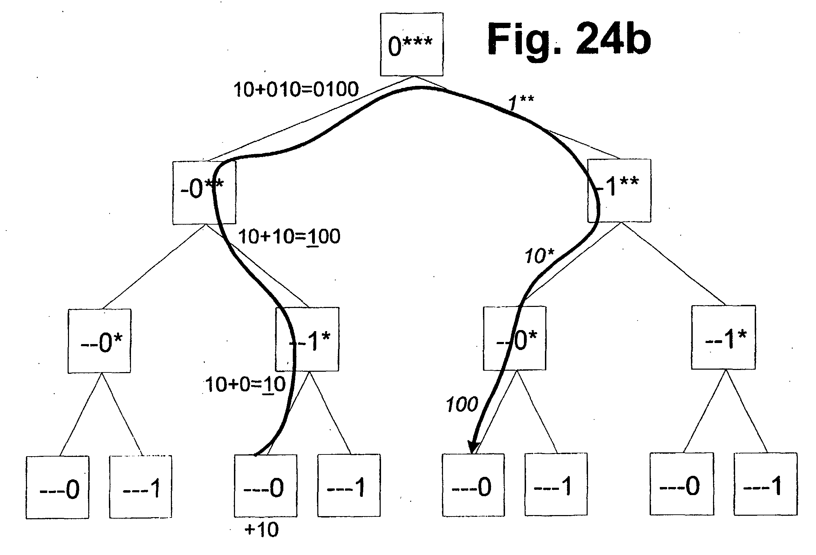

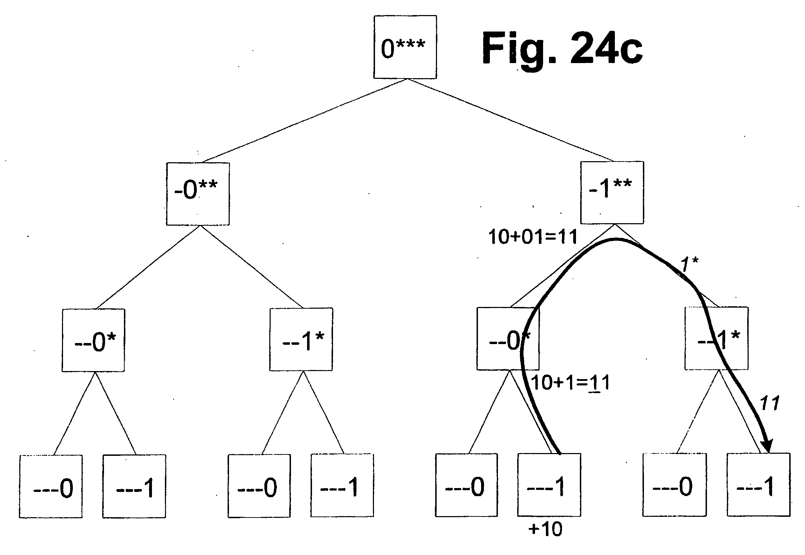

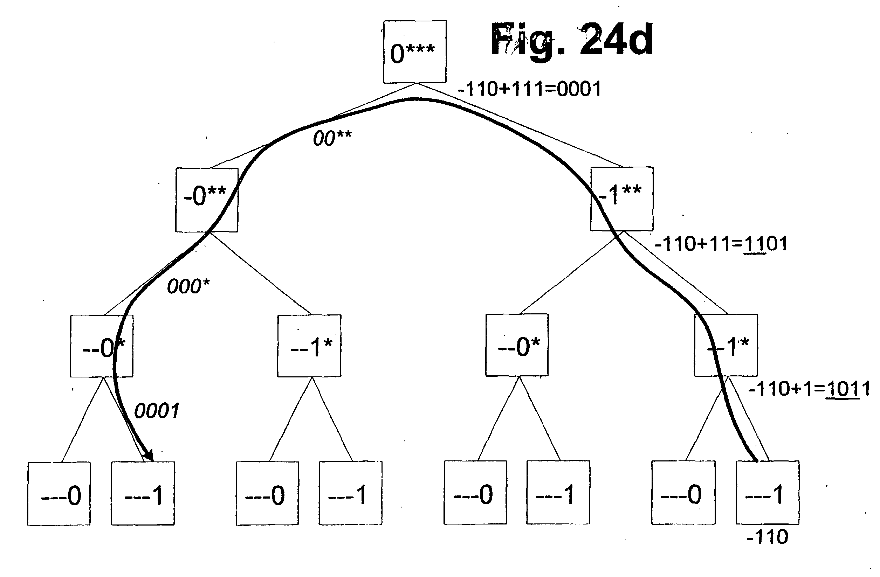

**Figur 24** zeigt den Aufbau des Adresschemas eines eindimensionalen CT-Baumes. Die Rechtecke symbolisieren eine CT. Dabei ist die Adresse der CT eingetragen. kennzeichnet unrelevante Adressbits, die nicht ausgewertet werden, die relevanten Adressbits sind mit binärer 0 oder 1 angegeben, * steht für jedes beliebige Adressbit. Es ist leicht nachvollziehbar, daß durch Projektion dieses Schema auf mehrdimensionale Bäume ebenso angewendet werden kann, dabei stellen die angegebenen Adressen jeweils eine der Achsen dar; mit anderen Worten, pro Achse existiert ein entsprechendes separates Adressystem.
**Figur 24a** zeigt die Adressierung von CT 0001 aus. Dabei ist die relative Adresse -1 angegeben. Durch die Berechnung -1+1 = 00 ("relative Bewegung" + "Adresse der INITIATOR-CT auf aktueller Ebene"), kann die CT 0000 berechnet werden, die auf denselben lokalen Bus geschaltet ist.
In **Figur 24b** ruft die CT 0010 die relative Adresse +10 auf. Die Berechnung 10+0 = 10 ("relative Bewegung" + "Adresse der INITIATOR-CT auf aktueller Ebene") ergibt den Übertrag 1, da der Adressbereich des niedersten lokalen Busses-genau ein Bit breit ist. Dadurch wird der nächst höhere Bus selektiert. Dessen Adressberechnung ergibt mit 10+10 = 100 ("relative Bewegung" + "Adresse der INITIATOR-CT auf aktueller Ebene") erneut einen Übertrag, da dessen Adressbereich mit 2 Bit um genau eins größer ist, als der Adressbereich des niedersten Busses. Auf der nächsthöheren Ebene tritt bei der Berechnung 10 + 010 = 0100 kein Übertrag auf, sodaß das 3. Bit (von links) den Pfad 1** mit der nächst tieferen Ebene adressiert, das 2. Bit (von links) den Pfad 10* der wiederum nächst niedersten Ebene adressiert und schließlich das letzte Bit die TARGET-CT selektiert. **Figur 24c** zeigt das bekannt Verfahren über 2 Ebenen in positive Richtung und Figur 24d zeigt das Verfahren über drei Ebenen in negativer Richtung mit negativem Überlauf.

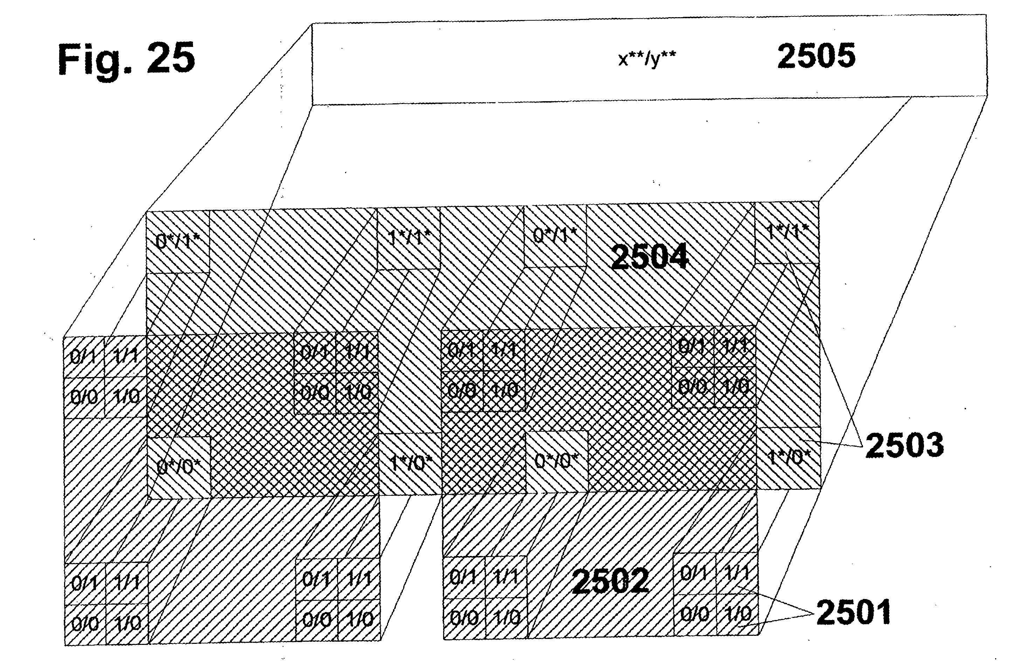

**Figur 25** zeigt den Aufbau eines 2-dimensionalen CT-Baumes. Auf der untersten Ebene (2502) befinden sich 2-dimensional angeordnet die CTs (2501). Die Adresse der Dimension ist mit x/y in der jeweiligen CT angegeben. 2502 übergeordnet ist die nächsthöhere Ebene (2504). Deren CTs (2503) steuern jeweils eine Gruppe von 4 CTs der Ebene 2502. Der Adressraum der CTs auf 2504 ist um ein Bit weiter, * kennzeichnet die Adressbits der Ebene 2502, die für die Selektion der CTs auf 2504 irrelevant sind. 2504 übergeordnet befindet sich die ROOT-CT 2505. Deren Adresse ist wiederum um ein Bit weiter, die Bedeutung von * ist äquivalent.

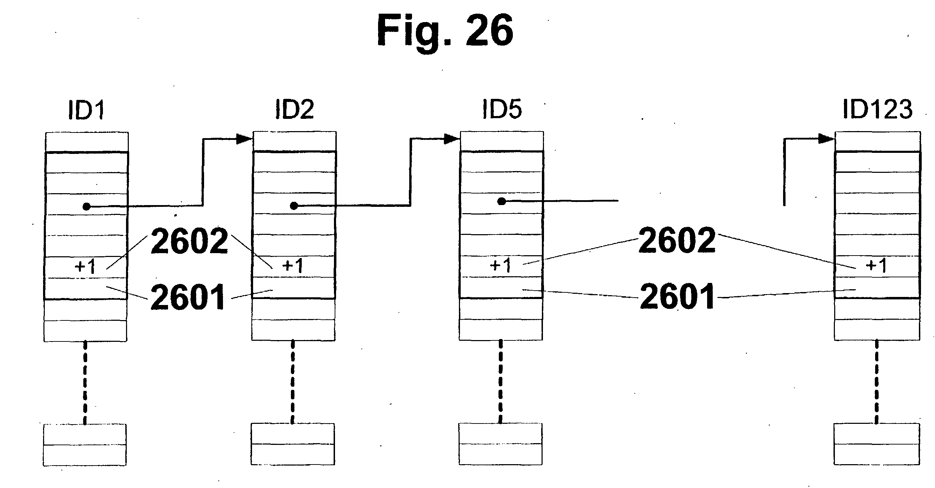

**Figur 26** zeigt die Verkettung des Garbage-Kollektors bei der Mikrokontroller-Implementierung. Dabei sind sämtliche KRs miteinander über die Headereinträge (garbage-previous/garbage-next) miteinander verkettet. Beim Durchlaufen des Garbage-Kollektors durch die Liste, wird das Alter der KR durch Erhöhen des Eintrages um (+1) für die Cache-Statistik (2602) protokolliert. Der Garbage-Kollektor achtet auf den Eintrag KR-Statistik (2601), der anzeigt, ob die KR noch in der FILMO-Liste hängt. In diesem Fall darf die KR nicht von GC gelöscht werden, da sie noch unkonfigurierte KW enthält. Alternativ könnte dieser Test auch über die Einträge FILMO-next und FILMO-previous ablaufen.

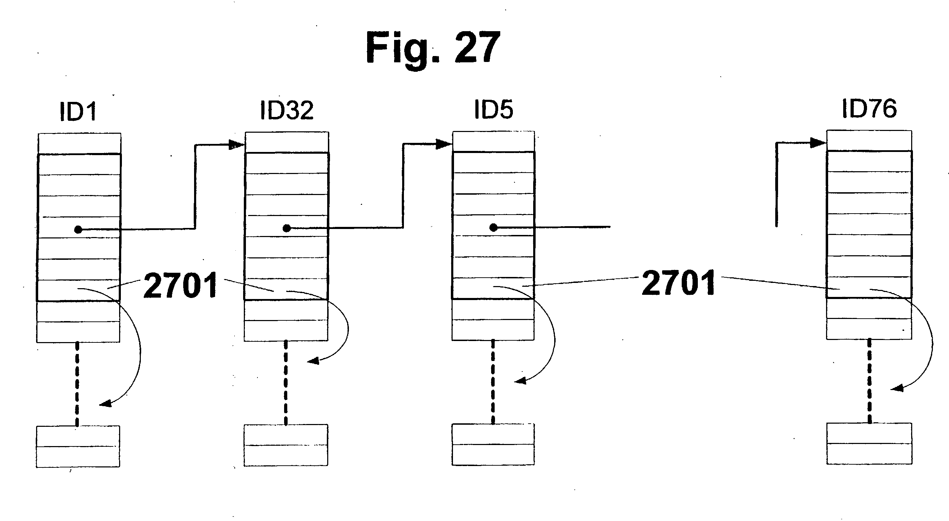

In **Figur 27** ist die Verkettung der FILMO-Liste dargestellt.
Dabei kann die Verkettung eine vollkommen andere als in der Garbage-Liste (Fig. 26) sein. Die KRs sind über FILMO-previous und FILMO-next verkettet. Die Einträge KR-Statistik (2701) zeigen auf das jeweils erste noch nicht konfigurierte KW in der jeweiligen KR. Ein FILMO-Lauf gestaltet sich derart, daß in der ersten ID die KR gestartet wird. Nach Ausführung wird die Position des nicht ausgeführten KW nach 2701 geschrieben. Sollte KR komplett ausgeführt worden sein, wird das KR aus der verketteten FILMO-Liste entfernt, verbleibt aber im Speicher. Danach wird über die FILMO-Liste zu dem nächsten KR gesprungen, das ebenso verarbeitet wird.

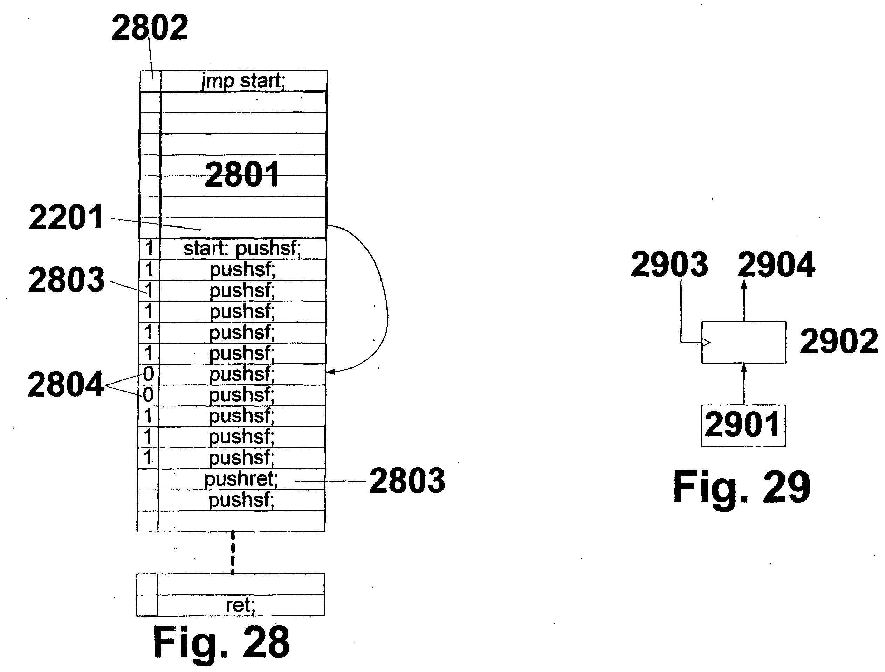

**Figur 28** verdeutlicht den Aufbau einer KR bei Mikrokontrollersteuerung. Zu Beginn steht ein Sprungbefehl, der hinter den Header (2801) der KR springt. Jedem KW zugeordnet ist das FILMO-Bit (2802). Eine 1 (2803) zeigt an, daß das KW von den CEL akzeptiert wurde (ACCEPT) und beim nächsten Durchlauf nicht mehr ausgeführt wird. Eine 0 (2804) zeigt einen REJECT an, das KW muß beim nächsten Durchlauf erneut ausgeführt werden. Die optionale KR-Statistik (2701) zeigt auf das erste mit 0 gekennzeichente KW. Erhält PUSHRET (2805) einen REJECT, wird die Abarbeitung des KR hier abgebrochen und beim nächsten Durchlauf entweder beim ersten KW oder an der Stelle auf die 2701 zeigt neu aufgesetzt. Ansonsten wird das KR an dessen Ende bei 2806 ordentlich verlassen.

**Figur 29** zeigt die Schaltung zum Sichern der Statusinformationen einer CEL vor dem Durchlaufen des FILMOs oder Starten einer KR. Die Statusinformation gelangt aus der CEL (2901) auf ein Register (2902). Vor dem Durchlaufen des FILMOs oder Starten einer KR sendet die CT ein Freigabesignal (2903) an 2902. Daraufhin wird die Statusinformation übernommen und an die CT weitergeleitet (2904). 2904 bleibt konstant bis zum nächsten Absenden von 2903.

### Begriffsdefinition

**ACCEPT** Signal, das anzeigt, daß die adressierte CEL sich in einem konfigurierbaren Zustand befindet und das gesendete KW annimmt.

**Block-Befehle (u.a.BLOCK-MOVE)** Befehle, die eine Mehrzahl von Daten (einen Block) im Speicher oder zwischen Speicher und Peripherie verschieben. Dabei wird die Herkunftsadresse der zu verschiebenden Daten, die Zieladresse der Daten und die Länge das Datenblocks angeben.

**Broadcast** Senden einer Information an eine Vielzahl von Empfängern.

**Datenempfänger** Die Einheit(en), die Ergebnisse der CEL weiterverarbeitet/-arbeiten

**Datensender** Die Einheit(en), die Daten für die CEL als Operanden zur Verfügung stellt/stellen

**Datenwort** Ein Datenwort besteht aus einer beliebig langen Bit-Reihe. Diese Bit-Reihe stellt eine Verarbeitungseinheit für eine Anlage dar. In einem Datenwort können sowohl Befehle für Prozessoren o.ä. Bausteine sowie rein Daten kodiert werden.

**Deadlock** Zustand, indem aufgrund gegenseitiger Blockade keinerlei Datenverarbeitung möglich ist.

**DFP** Datenflußprozessor nach Patent/Offenlegung DE 44 16 881

**DPGA** Dynamisch konfigurierbare FPGAs. Stand der Technik

**Elemente** Sammelbegriff für alle Arten von in sich abgeschlossenen Einheiten, welche als Stück in einem elektronischen Baustein zum Einsatz kommen können. Elemente sind also:
- Konfigurierbare Zellen aller Art
- Cluster
- RAM-Blöcke
- Logik
- Rechenwerke
- Register
- Multiplexer
- I/O Pins eines Chips

**Ereignis** Ein Ereignis kann durch ein Hardwareelement in irgendeiner zur Anwendung passenden Art und Weise ausgewertet werden und als Reaktion auf diese Auswertung eine bedingte Aktion auslösen. Ereignisse sind somit zum Beispiel:
- Taktzyklus einer Rechenanlage.
- internes oder externes Interrupt-Signal.
- Trigger-Signal von anderen Elementen innerhalb des Bausteines.
- Vergleich eines Datenstroms und/oder eines Befehlstroms mit einem Wert.
- Input/Output Ereigenisse.
- Ablaufen, überlaufen, neusetzen etc. eines Zählers.
- Auswerten eines Vergleichs.

**FIFO** First-In, First-Out Speicher nach dem Stand der Technik

**FILMO** Abgewandeltes FIFO, aus dem linear Daten gelesen werden. Eine Beschränkung des Lesezeigers auf den Beginn des Speichers ist nicht vorhanden.

**FPGA** Programmierbarer Logikbaustein. Stand der Technik.
F-PLUREG Register in dem die Funktion der CEL gesetzt wird. Ebenfalls wird der OneShot- und Sleep-Mode gesetzt. Das Register wird von der PLU beschrieben.

**Fragmentierung** Zerteilen von Speicher in eine Vielzahl oftmals kleiner und damit nutzloser Speicherbereiche.

**Garbage-Kollektor** Einheit zum Verwalten des Speichers. Verhindert eine Fragmentierung.

**H-Pegel** Logisch 1 Pegel, abhängig von der verwendeten Technologie

**HOST** Einem Baustein oder Baugruppe übergeordneter Rechner.

**IDLE-Zyklus** Zyklus, in dem eine Statemachine keine Verarbeitung durchführt. Grundzustand einer Statemachine.

**INITER-CT-BUS** Bussystem zwischen den CTs einer Ebene und einer höherliegenden CT (oder CT-Gruppe).

**INITIATOR** CT, die einen Zugriff auf den Inter-CT-Bus startet.

**Pointer** Zeiger auf eine Adresse bzw. ein Datenwort.

**konfigurierbares Element (KE)** Ein konfigurierbares Element stellt eine Einheit eines Logik-Bausteines dar, welche durch ein Konfigurationswort für eine spezielle Funktion eingestellt werden kann. Konfigurierbare Elemente sind somit, alle Arten von RAM Zellen, Multiplexer, Arithmetische logische Einheiten, Register und alle Arten von interner und externer Vernetzungsbeschreibung etc.}

**konfigurierbare Zelle (CEL)** Siehe Logikzellen

**Konfigurieren** Einstellen der Funktion und Vernetzung einer logischen Einheit, einer (FPGA)-Zelle oder einer CEL (vgl. umkonfigurieren).

**Konfigurationsdaten** Beliebige Menge von Konfigurationsworten.

**Konfigurationsroutine (KR)** Mehrere Konfigurationsworte zu einem Algorithmus zusammengefügte.

**Konfigurationsspeicher** Der Konfigurationspeicher enthält ein oder mehrere Konfigurationsworte.

**Konfigurationswort (KW)** Ein Konfigurationswort besteht aus einer beliebig langen Bit-Reihe. Diese Bit-Reihe stellt eine gültige Einstellung für das zu konfigurierende Element dar, so das eine funktionsfähige Einheit entsteht.

**Ladelogik** Einheit zum Konfigurieren und Umkonfigurieren der CEL. Ausgestaltet durch einen speziell an seine Aufgabe angepaßten Mikrokontroller.

**Logikzellen** Bei DFPs, FPGAs, DPGAs verwendete konfigurierbare Zellen, die einfache logische oder arithmetische Aufgaben gemäß ihrer Konfiguration erfüllen.

**Lookup-Tabelle** Stand der Technik. Verfahren zum Übersetzen von Daten.

**LUT1** Lookup-Tabelle, die einen Trigger auf eine ID übersetzt und feststellt, ob der Trigger einer gültigen ID zugeordnet ist.

**LUT2** Lookup-Tabelle, die eine ID auf die Adresse der entsprechenden KR im lokalen Speicher übersetzt und feststellt, ob die KR im lokalen Speicher vorhanden ist.

**L-Pegel** Logisch 0 Pegel, abhängig von der verwendeten Technologie

**Maske** Bitkombination, die die gültigen Signale innerhalb einer Mehrzahl von Signalen angibt.

**Priorisierung** Festlegung einer Reihenfolge.

**RECONFIG** Rekonfigurierbarer Zustand einer CEL.

**RECONFIG-Trigger** Setzen einer CEL in den rekonfigurierbaren Zustand.

**REJECT** Signal, das anzeigt, daß die adressierte CEL sich in einem nicht konfigurierbaren Zustand befindet und das gesendete KW nicht annimmt.

**REMOVE-<ID>** 1. Befehl innerhalb eines KR zum Entfernen der durch ID referenzierten KR. 2. Befehl einer übergeordneten CT über ein separates Interface oder Handshaking an eine untergeordnete CT zum löschen der durch ID referenzierten KR.

**RESET** Rücksetzen eines Bausteines oder eines ganzen Computersystems in einen definierten Grundzustand..

**ROOT-CT** CT der höchsten Hierarchieebene mit direktem Zugriff auf den externen Konfigurationsspeicher.

**Round-Robin-Arbiter** Arbiter der im Kreis läuft und immer dem zuletzt arbitrierten Signal die niederste Priorität zuordnet.

**Statemachine** siehe Zustandsmaschine.

**Synchronisationssignale** Statussignale die von einem konfigurierbaren Element oder einem Rechenwerk generiert werden und zur Steuerung und Synchronisation der Datenverarbeitung an weitere konfigurierbare Element oder Rechenwerke weitergeleitet werden. Es ist auch möglich ein Synchronisationssignal zeitlich verzögert (gespeichert) an ein und dasselbe konfigurierbare Element oder Rechenwerk zurückzuleiten.

**TARGET** CT, die einen Ziel eines Zugriffs auf den Inter-CT-Bus ist.

**Trigger** Synonym für Synchronisationssignale.

**Umkonfigurieren** Neues Konfigurieren von einer beliebigen Menge von CELs während eine beliebige Restmenge von CELs ihre eigenen Funktionen fortsetzen (vgl. konfigurieren).

**Verkettete-Liste** Über Pointer zusammengefügte Datenstruktur nach dem Stand der Technik.

**Zellen** Synonym für konfigurierbare Elemente

**Zustandsmaschine** Logik, die diversen Zuständen annehmen kann. Die Übergänge zwischen den Zuständen sind von verschiedenen Eingangsparametern abhängig. Diese Maschinen werden zur Steuerung komplexer Funktionen eingesetzt und entsprechen dem Stand der Technik.

## Patentansprüche

1. Verfahren zum Cachen von Befehlen in aus mehreren Rechenwerken bestehenden Mikroprozessoren und in Bausteinen mit zwei- oder mehrdimensionaler Zellanordnung (z.B. FPGAs, DPGAs, DFPs, o.dgl.), **dadurch gekennzeichnet, daß**
1.1 mehrere Zellen und Rechenwerke (CEL) zu einer Mehrzahl von Gruppen zusammengefaßt werden, wobei jeder Teilgruppe eine Cache-Einheit (CT) zugeordnet ist,
1.2 die Cache-Einheiten der einzelnen Teilgruppen werden über eine Baumstruktur an eine übergeordnete Cache-Einheit (ROOT-CT) geschaltet, die Zugriff auf den Befehlsspeicher Speicher (ECR) besitzt, in dem die Befehle abgelegt sind,
1.3 Befehle werden zu Befehlssequenzen (KR) zusammengefaßt, die immer als ganze gecachet und zwischen den Caches übertragen werden,
1.4 jede Cache-Einheit auf unterster oder mittlerer Ebene des Baumes fordert die benötigten Befehle bei der jeweils übergeordneten Cache-Einheit an,
1.5 eine übergeordnete Cache-Einheit sendet eine angeforderten Befehlssequenzen an die untergeordnete Einheit, sofern sie die Befehlssequenzen in ihrem lokalen Speicher hält,
1.6 eine übergeordnete Cache-Einheit fordert eine angeforderten Befehlssequenzen bei der ihr übergeordneten Cache-Einheit an, sofern sie die Befehlssequenzen nicht in ihrem lokalen Speicher hält,

2. Verfahren nach Anspruch 1, **dadurch gekennzeichnet, daß**
Befehlssequenzen als Ganze gelöscht werden.

3. Verfahren nach Anspruch 1 bis 2, **dadurch gekennzeichnet, daß**
Befehlssequenzen einer Cache-Einheit gelöscht werden, wenn nicht genügend Platz zum Laden einer weiteren angeforderten Befehlssequenz im lokalen Speicher vorhanden ist.

4. Verfahren nach Anspruch 1 bis 2, **dadurch gekennzeichnet, daß**
ein Befehl (REMOVE) innerhalb einer Befehlssequenz einen Vorgang auslöst, durch den Befehlssequenzen einer Cache-Einheit gelöscht werden.

5. Verfahren nach Anspruch 1 bis 4, **dadurch gekennzeichnet, daß**
ein Befehl (EXECUTE) innerhalb einer Befehlssequenz das Laden einer bestimmten kompletten Befehlssequenz auslöst.

6. Verfahren nach Anspruch 1 bis 5, **dadurch gekennzeichnet, daß**
ein beliebiger Befehl (EXECUTE, REMOVE, etc.) über eine Busverbindung zwischen den Cache-Einheiten eine dem Befehl entsprechende Aktion auf einer bliebigen adressierten Cache-Einheit auslöst.

7. Verfahren nach Anspruch 1 bis 6, **dadurch gekennzeichnet, daß**
eine Programmsequenz, die nicht effektive cachebar ist, da diese nur von einer Cache-Einheit verwendet wird, in kleine Teilsequenzen zerlegt wird, die von mehreren Cache-Einheiten benötigt werden, eine weitere Teilsequenz (IKR) enthält den nicht cachebaren Rest der Befehlssequenz und die Aufrufe der cachebaren Teilsequenzen.

8. Verfahren nach Anspruch 1 bis 7, **dadurch gekennzeichnet, daß**
jeder Befehlssequenz eine Statistik zugeordnet ist, die Informationen über das Alter, d.h. der Verweildauer im Speicher der Cache-Einheit, der Befehlssequenz gibt.

9. Verfahren nach Anspruch 1 bis 7, **dadurch gekennzeichnet, daß**
jeder Befehlssequenz eine Statistik zugeordnet ist, die Informationen über die Häufigkeit der Aufrufe der Befehlssequenz gibt.

10. Verfahren nach Anspruch 1 bis 7, **dadurch gekennzeichnet, daß**
jeder Befehlssequenz eine Statistik zugeordnet ist, die Informationen über die Länge der Befehlssequenz gibt.

11. Verfahren nach Anspruch 1 bis10, **dadurch gekennzeichnet, daß**
die Löschroutine so ausgelegt ist, daß sie die Statistik jeder Befehlssequenz auswertet und die entsprechend des ausgeführten Algorithmuses unwichtigste Befehlssequenz entfernt.

12. Verfahren nach Anspruch 1 bis 11, **dadurch gekennzeichnet, daß**
die Löschroutine an den auszuführenden Algorithmus programmierbar anpassbar ist.

## Claims

1. Method of caching commands in microprocessors consisting of a plurality of arithmetic units and in modules with a two-dimensional or multi-dimensional cell arrangement (e.g. FPGAs, DPGAs, DFPs or the like), **characterised in that**
1.1 a plurality of cells and arithmetic units (CEL) are combined to form a plurality of groups, a cache unit (CT) being associated with each subgroup,
1.2 the cache units of the individual subgroups are connected via a tree structure to a higher-order cache unit (ROOT-CT) which has access to the instruction memory (ECR) in which the commands are stored,
1.3 commands are combined to form command sequences (KR) which are always cached as a whole and are transferred between the caches,
1.4 each cache unit on the lowermost or middle level of the tree requests the required commands from the respective higher-order cache unit,
1.5 a higher-order cache unit sends a requested higher-order command sequence to the subordinate unit if it contains the command sequence in its local memory,
1.6 a higher-order cache unit requests a requested command sequence from a higher-order cache unit if it does not contain the command sequence in its local memory.

2. Method according to claim 1, **characterised in that** command sequences are removed as a whole.

3. Method according to claims 1 to 2, **characterised in that** command sequences of a cache unit are removed if there is insufficient space for loading another required command sequence in the local memory.

4. Method according to claims 1 to 2, **characterised in that** one command (REMOVE) within a command sequence triggers a process by means of which command sequences of a cache unit are removed.

5. Method according to claims 1 to 4, **characterised in that** one command (EXECUTE) within a command sequence triggers the loading of a specific complete command sequence.

6. Method according to claims 1 to 5, **characterised in that** an arbitrary command (EXECUTE, REMOVE, etc.) triggers action on an arbitrary addressed cache unit in accordance with the command by means of a bus connection between the cache units.

7. Method according to claims 1 to 6, **characterised in that** a program sequence which is not effectively cacheable as it is only used by one cache unit is broken down into small partial sequences required by a plurality of cache units, another partial sequence (IKR) containing the remaining non-cacheable part of the command sequence and the calls for the cacheable partial sequences.

8. Method according to claims 1 to 7, **characterised in that** statistics providing information about the age of the command sequence, i.e. the residence time in the memory of the cache unit, are associated with each command sequence.

9. Method according to claims 1 to 7, **characterised in that** statistics providing information about the frequency of the calls for the command sequence are associated with each command sequence.

10. Method according to claims 1 to 7, **characterised in that** statistics providing information about the length of the command sequence are associated with each command sequence.

11. Method according to claims 1 to 10, **characterised in that** the clean-up routine is designed in such a manner that it evaluates the statistics of each command sequence and removes the least important command sequence in accordance with the algorithm executed.

12. Method according to claims 1 to 11, **characterised in that** the clean-up routine can be adapted in a programmable manner to the algorithm to be executed.

## Revendications

1. Procédé pour la mise en antémémoire d'instructions dans des microprocesseurs composés de plusieurs unités arithmétiques et dans des modules ayant une structure de cellules bi-ou multidimensionnelle (FPGA, DGPA, DFP ou analogues), **caractérisé par le fait que**
1.1 plusieurs cellules et unités arithmétiques (CEL) sont réunies en un grand nombre de groupes, une unité d'antémémoire (CT) étant affectée à chaque sous-groupe,
1.2 les unités d'antémémoire des différents sous-groupes sont connectées par une structure en arbre à une unité d'antémémoire supérieure (ROOT-CT) qui peut accéder à la mémoire d'instructions (ECR) dans laquelle sont stockées les instructions,
1.3 les instructions sont regroupées en séquences d'instructions (KR) qui sont toujours mises en antémémoire et transmises entre les antémémoires en bloc,
1.4 chaque unité d'antémémoire située au niveau inférieur ou intermédiaire de l'arbre demande les instructions nécessaires à l'unité d'antémémoire respectivement supérieure,
1.5 une unité d'antémémoire supérieure envoie les séquences d'instructions demandées à l'unité inférieure si elle détient les séquences d'instructions dans sa mémoire locale,
1.6 une unité d'antémémoire supérieure demande les séquences d'instructions à l'unité d'antémémoire qui lui est supérieure si elle ne détient pas les séquences d'instructions dans sa mémoire locale.

2. Procédé selon la revendication 1, **caractérisé par le fait que**
les séquences d'instructions sont effacées en bloc.

3. Procédé selon les revendications 1 à 2, **caractérisé par le fait que**
des séquences d'instructions d'une unité d'antémémoire sont effacées lorsqu'il n'y a pas assez de place disponible pour charger une autre séquence d'instructions demandée dans la mémoire locale.

4. Procédé selon les revendications 1 à 2, **caractérisé par le fait que**
une instruction (REMOVE) au sein d'une séquence d'instructions déclenche un processus entraînant l'effacement de séquences d'instructions d'une unité d'antémémoire.

5. Procédé selon les revendications 1 à 4, **caractérisé par le fait que**
une instruction (EXECUTE) au sein d'une séquence d'instructions déclenche le chargement d'une séquence d'instructions donnée complète.

6. Procédé selon les revendications 1 à 5, **caractérisé par le fait que**
une instruction quelconque (EXECUTE, REMOVE, etc.) déclenche une action correspondante à l'instruction sur une unité d'antémémoire d'adresse quelconque via une liaison par bus entre les unités d'antémémoire.

7. Procédé selon les revendications 1 à 6, **caractérisé par le fait que**
une séquence de programme qui n'est pas effectivement cachable, car n'étant utilisée que par une unité d'antémémoire, est décomposée en petites sous-séquences nécessaires à plusieurs unités d'antémémoire, une autre sous-séquence (IKR) contenant le reste non cachable de la séquence d'instructions et les appels des sous-séquences cachables.

8. Procédé selon les revendications 1 à 7, **caractérisé par le fait que**
à chaque séquence d'instructions est associée une statistique qui donne des informations sur l'âge, c'est-à-dire la durée de séjour dans la mémoire de l'unité d'antémémoire, de la séquence d'instructions.

9. Procédé selon les revendications 1 à 7, **caractérisé par le fait que**
à chaque séquence d'instructions est associée une statistique qui donne des informations sur la fréquence des appels de la séquence d'instructions.

10. Procédé selon les revendications 1 à 7, **caractérisé par le fait que**
à chaque séquence d'instructions est associée une statistique qui donne des informations sur la longueur de la séquence d'instructions.

11. Procédé selon les revendications 1 à 10, **caractérisé par le fait que**
la routine d'effacement est conçue de manière à évaluer la statistique de chaque séquence d'instructions et à supprimer la séquence d'instructions la moins importante en fonction de l'algorithme exécuté.

12. Procédé selon les revendications 1 à 11, **caractérisé par le fait que**
la routine d'effacement est adaptable par programmation à l'algorithme à exécuter.
